# EUROPEAN PATENT SPECIFICATION

(11) **EP 4 458 096 B1**
(45) Date of publication and mention of the grant of the patent: **11.11.2026**
(21) Application number: 22916761.4
(22) Date of filing: 28.12.2022
(51) Int. Cl.: H04W 74/08, H04W 74/00, H04W 72/20, H04L 1/18, H04W 92/18, H04W 74/0808

(54) **METHOD AND APPARATUS OF CHANNEL ACCESS FOR TRANSMISSION AND RECEPTION OF SIDELINK INFORMATION IN UNLICENSED BAND**
VERFAHREN UND VORRICHTUNG FÜR KANALZUGRIFF ZUM SENDEN UND EMPFANGEN VON SIDELINK-INFORMATIONEN IN EINEM UNLIZENZIERTEN BAND
PROCÉDÉ ET APPAREIL D'ACCÈS À UN CANAL POUR LA TRANSMISSION ET LA RÉCEPTION D'INFORMATIONS DE LIAISON LATÉRALE DANS UNE BANDE SANS LICENCE

(30) Priority: 30.12.2021 KR 20210193282
(43) Date of publication of application: 06.11.2024
(73) Proprietor: SAMSUNG ELECTRONICS CO., LTD., Yeongtong-gu Suwon-si, Gyeonggi-do 16677 (KR)
(72) Inventor: PARK, Sungjin, Suwon-si, Gyeonggi-do 16677 (KR); SHIN, Cheolkyu, Suwon-si, Gyeonggi-do 16677 (KR); RYU, Hyunseok, Suwon-si, Gyeonggi-do 16677 (KR); YEO, Jeongho, Suwon-si, Gyeonggi-do 16677 (KR)
(74) Representative: Nederlandsch Octrooibureau
(86) International application number: PCT/KR2022/021529
(87) International publication number: WO 2023/128620

(56) References cited:
- WO-A1-2019/168384
- WO-A1-2021/030323
- WO-A1-2021/179114
- US-A1- 2020 037 343
- US-A1- 2021 160 778
- NTT DOCOMO ET AL: "Channel access procedures for NR-U", vol. RAN WG1, no. Chongqing, China; 20191014 - 20191020, 7 October 2019 (2019-10-07), XP051809009, Retrieved from the Internet <URL:https://ftp.3gpp.org/tsg_ran/WG1_RL1/TSGR1_98b/Docs/R1-1911160.zip R1-1911160_72221_Channel access procedures for NR-U_final.docx> [retrieved on 20191007]
- INTEL CORPORATION: "Summary#2 for AI 7.2.4.2.2 Mode-2 Resource Allocation", vol. RAN WG1, no. Reno, USA; 20190513 - 20190517, 16 May 2019 (2019-05-16), XP051740044, Retrieved from the Internet <URL:http://www.3gpp.org/ftp/tsg%5Fran/WG1%5FRL1/TSGR1%5F97/Docs/R1%2D1907771%2Ezip> [retrieved on 20190516]
- WILUS INC: "Channel access procedure for NR-U", vol. RAN WG1, no. Chongqing, China; 20191014 - 20191020, 8 October 2019 (2019-10-08), XP051809310, Retrieved from the Internet <URL:https://ftp.3gpp.org/tsg_ran/WG1_RL1/TSGR1_98b/Docs/R1-1911312.zip R1-1911312_Channel access_final.docx> [retrieved on 20191008]

## Description

### [Technical Field]

The disclosure relates to a channel access method for transmitting and receiving sidelink information in a wireless communication system, and in particular, to a procedure and method for sidelink-based channel access in an unlicensed band.

### [Background Art]

Fifth generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

NTT DOCOMO ET AL: "Channel access procedures for NR-U", 3GPP DRAFT; R1-1911160_72221 discusses remaining issues after the RAN#98 meeting and the RAN#84 meeting on the channel access procedure for NR-U.

INTEL CORPORATION: "Summary#2 for Al 7.2.4.2.2 Mode-2 Resource Allocation", 3GPP DRAFT; RI-1907771, provides details of the Mode-2 sidelink resource allocation aspects identified above and suggest initial proposals for RAN 1 WG discussion/decision.

WILUS INC: "Channel access procedure for NR-U", 3GPP DRAFT; R1 - 1911312, discusses and provides views on i6us Cat-2 LBT detailed design, channel access mechanisms for NR-U DRS, CA/wideband BWP operations, and CWS adjustments.

### [Disclosure of Invention]

### [Solution to Problem]

The disclosure relates to a method of configuring sidelink broadcast information in a sidelink communication system, and a method and apparatus for transmitting and receiving the sidelink broadcast information.

The invention is defined by the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### [Brief Description of Drawings]

For a more complete understanding of the present disclosure and its advantages, reference is now made to the following description taken in conjunction with the accompanying drawings, in which like reference numerals represent like parts:
FIG. 1A illustrates a V2X system according to an embodiment of the disclosure;
FIG. 1B illustrates a V2X system according to an embodiment of the disclosure;
FIG. 1C illustrates a V2X system according to an embodiment of the disclosure;
FIG. 1D illustrates a V2X system according to an embodiment of the disclosure;
FIG. 2A illustrates a V2X communication method performed through a SL according to an embodiment of the disclosure;
FIG. 2B illustrates a V2X communication method performed through a SL according to an embodiment of the disclosure;
FIG. 3 illustrates a protocol of an SL UE according to an embodiment of the disclosure;
FIG. 4 illustrates a synchronization signal that may be received by an SL UE according to an embodiment of the disclosure;
FIG. 5 illustrates a frame structure of an SL system according to an embodiment of the disclosure;
FIG. 6 illustrates a channel access procedure in an unlicensed band in a wireless communication system according to embodiments of the disclosure;
FIG. 7 illustrates a flowchart of a method for adjusting a CWS for channel access of a UE according to an embodiment of the disclosure;
FIG. 8 illustrates a flowchart of a method for adjusting a CWS for SL-based channel access in an unlicensed band of a UE according to a first embodiment of the disclosure;
FIG. 9 illustrates a flowchart of a method for adjusting a CWS for SL-based channel access in an unlicensed band of a UE according to an embodiment of the disclosure;
FIG. 10 illustrates a flowchart of a channel access method of a UE transmitting SL information in an unlicensed band according to an embodiment of the disclosure;
FIG. 11 illustrates a flowchart of a channel access method of a UE transmitting SL information in an unlicensed band according to another embodiment of the disclosure;
FIG. 12 illustrates a structure of a UE according to an embodiment of the disclosure; and
FIG. 13 illustrates a structure of a BS according to an embodiment of the disclosure.

### [Best Mode for Carrying out the Invention]

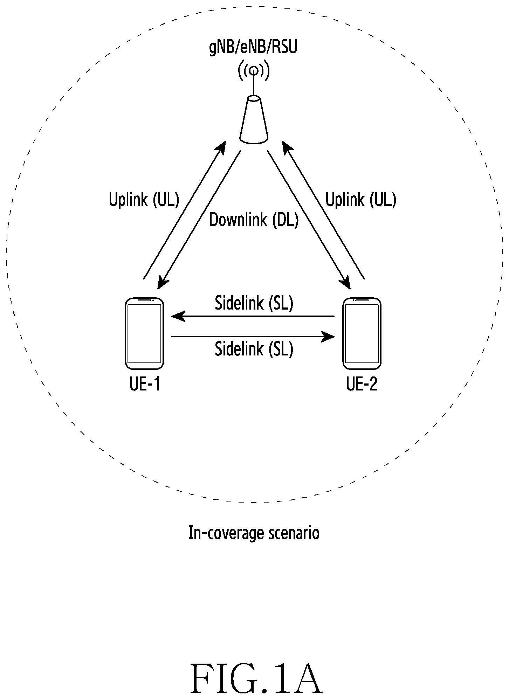

FIGS. 1A through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, preferable embodiments of the disclosure are described in detail with reference to the accompanying drawings.

In the describing of the embodiment, descriptions which are well known in the technical field to which the disclosure belongs and are not related directly to the disclosure will be omitted. This is to convey the disclosure more clearly by omitting unnecessary description.

For the same reason, some components may be exaggerated, omitted, or schematically illustrated in the accompanying drawings. Also, a size of each component does not completely reflect an actual size. In the drawings, like reference numerals denote like or corresponding components.

Advantages and features of the disclosure and methods of accomplishing the same may be understood more clearly by reference to the following detailed description of the embodiments and the accompanying drawings. However, the disclosure is not limited to embodiments disclosed below, and may be implemented in various forms. Rather, the embodiments are provided to complete the disclosure and to fully convey the concept of the disclosure to one of those ordinarily skilled in the art, and the disclosure will only be defined by the scope of claims. Throughout the specification, like reference numerals denote like components.

In this case, it will be understood that blocks of processing flow diagrams and combinations of the flow diagrams may be performed by computer program instructions. Since these computer program instructions may be loaded into a processor of a general purpose computer, a special purpose computer, or another programmable data processing apparatus, the instructions, which are performed by a processor of a computer or another programmable data processing apparatus, create a means for performing functions described in the block(s) of the flow diagram. The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing an instruction means for performing the functions described in the block(s) of the flow diagram. The computer program instructions may also be loaded into a computer or another programmable data processing apparatus, and thus, instructions for operating the computer or another programmable data processing apparatus by generating a computer-executed process when a series of operations are performed in the computer or another programmable data processing apparatus may provide operations for performing the functions described in the block(s) of the flow diagram.

In addition, each block may represent part of a module, segment, or code which includes one or more executable instructions for executing specified logical function(s). It should also be noted that in some alternative implementations, functions mentioned in blocks may occur not in an orderly manner. For example, two blocks illustrated successively may actually be executed substantially concurrently, or the blocks may sometimes be performed in a reverse order according to corresponding functions.

The term "~unit" used herein implies a software or hardware component, such as a Field Programmable Gate Array (FPGA) or Application Specific Integrated Circuit (ASIC), which performs certain tasks. However, the "~unit" is not limited to the software or hardware component. The "~unit" may be configured to reside on an addressable storage medium and configured to execute one or more processors. Thus, for example, the "~unit" may include components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "~units" may be combined into fewer components or "~units" further separated into additional components and "~units." In addition thereto, the components and "~units" may be implemented to reproduce one or more Central Processing Units (CPUs) included in a device or a security multimedia card. In addition, the "~ unit" may include one or more processors.

Embodiments of the disclosure are described by focusing on a radio access network, i.e., a new radio (NR), and a core network, i.e., a packet core 5G system, a 5G core network, or a next generation (NG) core, on a 5G mobile communication standard specified in the 3rd generation partnership project (3GPP) which is a mobile communication standardization organization. However, main features of the disclosure are applicable with slight modifications to other communication systems having similar technical backgrounds without significantly departing from the scope of the disclosure, which will be possible by decisions of those skilled in the technical field of the disclosure.

In order to support network automation, a network data collection and analysis function (NWDAF), which is a network function for analyzing and providing data collected from the 5G network, may be defined in the 5G system. The NWDAF may collect/store/analyze information from the 5G network and provide a result thereof to an unspecified network function (NF). An analysis result may be used independently in each NF.

For convenience of explanation, some terms and names defined in the 3GPP standard (5G, NR, LTE or a standard of a system similar thereto) may be used in the disclosure. However, the disclosure is not limited to the above terms and names, and thus may also be equally applied to a system conforming to another standard.

In addition, in the following description, a term for identifying an access node, terms referring to network entities, terms referring to messages, a term referring to an interface between network entities, terms referring to various pieces of identification information, or the like are exemplified for convenience of explanation. Therefore, without being limited to the terms used in the disclosure, other terms having equivalent technical meanings may also be used.

Unlike an LTE system, the 5G communication system supports various subcarrier spacings, including 15kHz, such as 30kHz, 60kHz, and 120kHz. A physical control channel uses polar coding, and a physical data channel uses low density parity check (LDPC). In addition, as a waveform for uplink transmission, not only discrete Fourier transform spread orthogonal frequency division multiplexing (DFT-S-OFDM) but also cyclic prefix based OFDM (CP-OFDM) is used. A hybrid automatic repeat request (HARQ) retransmission based on transport block (TB) is supported in LTE, whereas HARQ retransmission based on a code block group (CBG) in which several code blocks (CBs) are aggregated may be additionally supported in 5G.

Accordingly, various efforts are underway to apply the 5G communication system to an IoT network. For example, a technology such as sensor networks, machine to machine (M2M) communication, machine type communication (MTC), or the like is implemented by a scheme of beamforming, MIMO, array antenna, or the like, which is a 5G communication technology. A cloud radio access network (RAN) is applied as the aforementioned bigdata processing technology, which may be an example of convergence of the 5G technology and the IoT technology. As such, a plurality of services may be provided to a user in a communication system. In order to provide the plurality of services to the user, there is a need for a method capable of providing the respective services in the same time duration according to a feature thereof, and an apparatus using the method. Research on various services provided in the 5G communication system are underway, and one of them is a service satisfying a requirement of low latency and high reliability.

In case of vehicular communication, LTE-based V2X has been standardized based on a device-to-device (D2D) communication structure in 3GPP Rel-14 and Rel-15. At present, there is an ongoing effort to develop V2X, based on 5G NR. The NR V2X is scheduled to support unicast communication, groupcast (or multicast) communication, and broadcast communication between UEs. In addition, unlike LTE V2X aiming at transmitting and receiving basic safety information required to drive a vehicle on a road, the NR V2X is aiming at providing a more advanced service such as platooning, advanced driving, extended sensors, and remote driving.

Since the aforementioned advanced service requires a high data transfer rate, the NR V2X system may require a relatively wide bandwidth compared to the legacy LTE V2X system. To this end, an operation in a high frequency band may be supported, and there is a need to use analog beamforming to solve a coverage problem which occurs due to a frequency characteristic. In such an analog beamforming system, a method and apparatus for acquiring beam information between a transmitting (Tx) UE and a receiving (Rx) UE are required.

Embodiments of the disclosure are provided to support the aforementioned scenario, and include channel access procedures and methods when channel access is performed for sidelink communication between UEs in an unlicensed band.

To meet the demand for wireless data traffic having increased since deployment of 4G communication systems, efforts have been made to develop an improved 5G or pre-5G communication system. Therefore, the 5G or pre-5G communication system is also called a "Beyond 4G Network" or a "Post LTE System." And the 5G communication system defined by 3GPP is called a New Radio (NR) system.

The 5G communication system is considered to be implemented in higher frequency (mmWave) bands, e.g., 28GHz or 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems and are applied to the NR system.

In addition, in 5G communication systems, development for system network improvement is under way, to improve the network of the system, based on evolved small cells, advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Meanwhile, the Internet is evolving from a human-centered connection network in which humans generate and consume information to an Internet of Things (IoT) network in which information is exchanged and processed between distributed components such as objects. Internet of Everything (IOE) technology, which combines IoT technology with big data processing technology through connection with cloud servers, etc., is also emerging. In order to implement IoT, technical elements such as sensing technology, wired/wireless communication and network infrastructure, service interface technology, and security technology are required, and recently, sensor networks for connection between objects and machine to machine, M2M), and machine type communication (MTC) technologies are being studied. In an IoT environment, intelligent Internet Technology (IT) services that create new values in human life by collecting and analyzing data generated from connected objects can be provided. IoT may be applied to a field of smart home, smart building, smart city, smart car or connected car, smart grid, health care, smart home appliances, advanced medical service, etc.

Accordingly, various attempts are being made to apply the 5G communication system to the IoT network. For example, 5G communication such as sensor network, machine to machine (M2M), and machine type communication (MTC) is implemented by techniques such as beamforming, MIMO, and array antenna. The application of the cloud radio access network (cloud RAN) as the big data processing technology described above can be said to be an example of convergence of 5G technology and IoT technology.

Since the development of the wireless communication system makes it possible to provide various services as described above, there is a need for a method for effectively providing the services.

FIG. 1A to FIG. 1D illustrate V2X systems according to an embodiment of the disclosure.

FIG. 1A is an example for a case where all V2X UEs (i.e., UE-1 and UE-2) are located in the coverage of a Base Station (BS) (i.e., gNB/eNB/RSU)).

All of the V2X UEs (i.e., UE-1 and UE-2) located in the coverage of the BS (i.e., gNB/eNB/RSU) may receive data and control information from the BS (i.e., gNB/eNB/RSU) through downlink (DL) or may transmit the data and control information to the BS through Uplink (UL). In this case, the data and the control information may be data and control information for V2X communication. Alternatively, the data and the control information may be data and control information for typical cellular communication. In addition, the V2X UEs (i.e., UE-1 and UE-2) may transmit and receive the data and control information for V2X communication through Sidelink (SL).

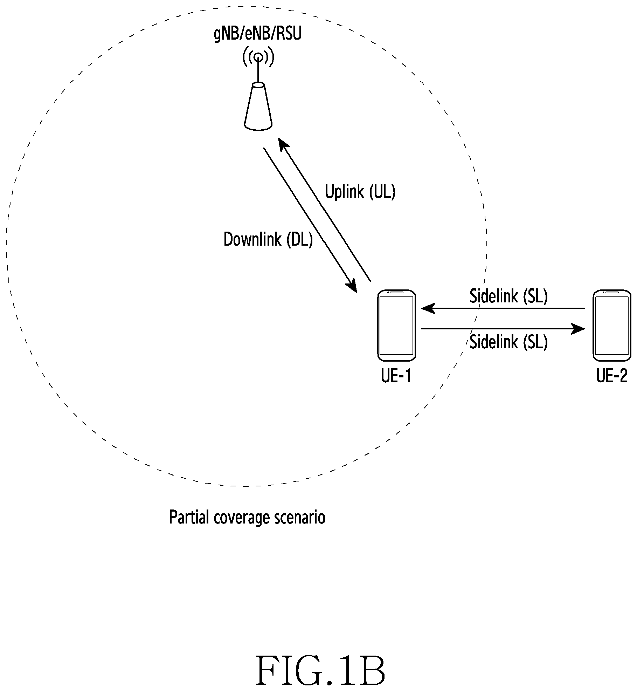

FIG. 1B illustrates an example for a case where, among the V2X UEs, the UE-1 is located in the coverage of the BS (i.e., gNB/eNB/RSU) and the UE-2 is located out of the coverage of the BS (i.e., gNB/eNB/RSU). FIG. 1B may be an example for partial coverage.

The UE-1 located in the coverage of the BS (i.e., gNB/eNB/RSU) may receive data and control information from the BS (i.e., gNB/eNB/RSU) through DL, or may transmit the data and control information to the BS (i.e., gNB/eNB/RSU) through UL.

The UE-2 located out of the coverage of the BS (i.e., gNB/eNB/RSU) is not able to receive data and control information from the BS (i.e., gNB/eNB/RSU) through DL, and may not be able to transmit the data and control information to the BS (i.e., gNB/eNB/RSU) through UL

The UE-2 may transmit and receive data and control information for V2X communication with the UE-1 through SL.

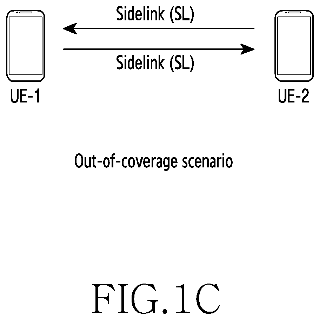

FIG. 1C illustrates an example for a case where all V2X UEs (i.e., UE-1 and the UE-2) are located out of the coverage of the BS (i.e., gNB/eNB/RSU).

Therefore, the UE-1 and the UE-2 are not able to receive data and control information from the BS (i.e., gNB/eNB/RSU) through DL, and are not able to transmit the data and control information to the BS (i.e., gNB/eNB/RSU) through UL.

The UE1 and the UE-2 may transmit and receive data and control information for V2X communication through SL.

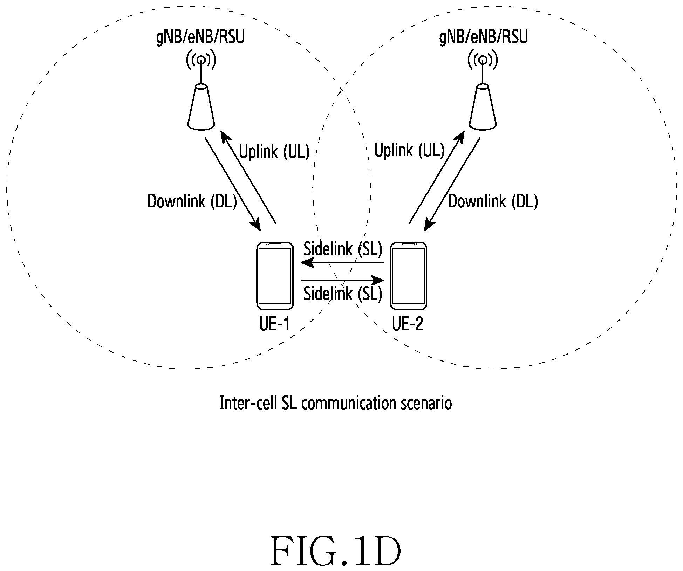

FIG. 1D illustrates an example for a scenario in which V2X communication is performed between UEs located in different cells. Specifically, a case where a V2X Tx UE and a V2X Rx UE have accessed to different BSs (gNB/eNB/RSU) (RRC connected state) or camp thereon (RRC disconnected state, i.e., RRC idle state) (inter-cell V2X communication) is illustrated. In this case, a UE-1 may be the V2X Tx UE, and a UE-2 may be the V2X Rx UE.

Alternatively, the UE-1 may be the V2X Rx UE, and the UE-2 may be the V2X Tx UE. The UE-1 may receive a V2X-dedicated System Information Block (SIB) from the BS (i.e., gNB/eNB/RSU) to which the UE-1 has accessed (or on which the UE-1 camps), and the UE-2 may receive the V2X-dedicated SIB from another BS (i.e., gNB/eNB/RSU) to which the UE-2 has accessed (or on which the UE-2 camps). In this case, information of the V2X-dedicated SIB received by the UE-1 may be the same as or different from information of the V2X-dedicated SIB received by the UE-2. If the SIB information is different from each other, there may be a need for unifying the information in order to perform SL communication between UEs located in different cells. Therefore, the UE-1 and the UE-2 may receive different information for SL communication by using the SIB from the BS (gNB/eNB/RSU) to which the UE-1 and the UE-2 have accessed (or on which the UE-1 and the UE-2 camp).

Although the V2X system including two UEs (i.e., UE-1 and UE-2) is illustrated in FIG. 1 for convenience of explanation, the disclosure is not limited thereto, and various numbers of UEs may participate in the V2X system. In addition, UL and DL between the BSs (i.e., gNB/eNB/RSU) and the V2X UEs (i.e., UE-1 and UE-2) may be referred to as a Uu interface, and SL between the V2X UEs (i.e., UE-1 and UE-2) may be referred to as a PC5 interface. Therefore, these terms may be interchangeably used in the disclosure.

Meanwhile, in the disclosure, the UE may include a UE supporting a device-to-device (D2D) communication, a vehicle supporting a vehicular-to-vehicular (V2V) communication, a vehicle supporting a vehicular-to-pedestrian (V2P) communication, a handset (e.g., a smartphone) of a pedestrian, a vehicle supporting a vehicular-to-network (V2N) communication, a vehicle supporting Vehicular-to-Infrastructure (V2I) communication, or the like. In addition, in the disclosure, the UE may include a Road side unit (RSU) equipped with a UE function, an RSU equipped with a BS function, and an RSU equipped with part of the BS function and part of the UE function.

In the disclosure, V2X communication may imply D2D communication, V2V communication, or V2P communication, and may be used interchangeably with SL communication.

In addition, in the disclosure, the BS may be a BS supporting both V2X communication and typical cellular communication, or may be a BS supporting only V2X communication. In addition, the BS may include a 5G BS (i.e., gNB), a 4G BS (i.e., eNB), an RSU, or the like. Unless otherwise specified in the disclosure, the BS and the RSU may be used interchangeably as the same concept.

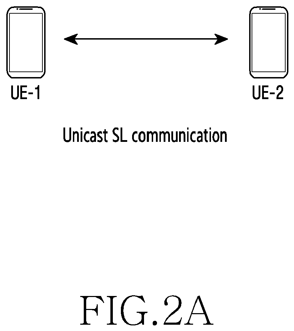

FIG. 2A illustrates a V2X communication method performed through SL according to an embodiment of the disclosure.

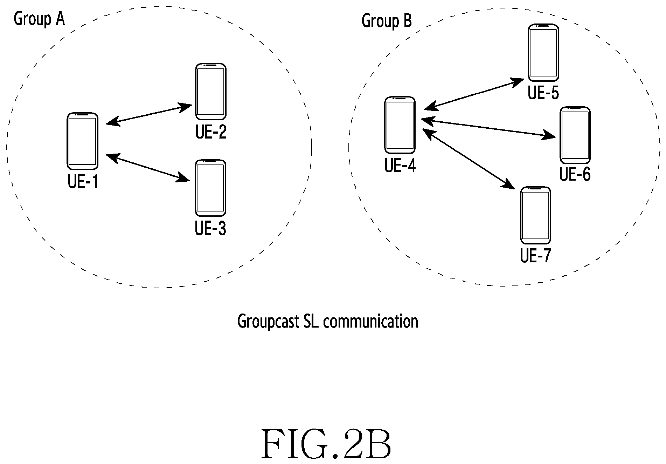

FIG. 2B illustrates a V2X communication method performed through SL according to an embodiment of the disclosure.

As shown in FIG. 2A, a Tx UE (i.e., UE-1) and a Rx UE (i.e., UE-2) may perform communication in a one-to-one manner, which may be referred to as unicast communication.

As shown in FIG. 2B, a Tx UE (i.e., UE-1 or UE-4) and a Rx UE (i.e., UE-2, UE-3, UE-5, UE-6, or UE-7) may perform communication in a one-to-one manner, which may be referred to as groupcast or multicast communication.

It is illustrated in FIG. 2B that the UE-1, the UE-2, and the UE-3 perform groupcast communication by constituting one group (i.e., group A), and the UE-4, the UE-5, the UE-6, and the UE-7 perform groupcast communication by constituting another group (i.e., group B). Each UE may perform groupcast communication only within a group to which the UE belongs, and communication between UEs belonging to different groups may be performed through one of unicast, groupcast, and broadcast communication methods. Although it is illustrated in FIG. 2B that two groups are constructed, the disclosure is not limited thereto, and the number of groups to be constructed may be greater than two.

Meanwhile, although not shown in FIG. 2A and FIG. 2B, the V2X UEs may perform broadcast communication. The broadcast communication implies a case where all V2X UEs receive data and control information transmitted by the V2X Tx UE through SL. For example, assuming that the UE-1 is a Tx UE for broadcast in FIG. 2B, all UEs (i.e., UE-2, UE-3, UE-4, UE-5, UE-6, and UE-7) may receive data and control information transmitted by the UE-1.

All of SL unicast, groupcast, and broadcast communication methods according to an embodiment of the disclosure may be supported in in-coverage, partial-coverage, and out-of-coverage scenarios.

In an SL system according to an embodiment of the disclosure, the following method may be used in resource allocation.

### (1) Mode-1 resource allocation

The mode-1 resource allocation implies a method of resource allocation scheduled by a BS. More specifically, in the mode-1 resource allocation, the BS may allocate a resource used in SL transmission to radio resource control (RRC)-connected UEs in a dedicated scheduling manner. The scheduled resource allocation method may be effective for interference management and resource pool management (i.e., dynamic allocation and/or semi-persistent scheduling (SPS) transmission) since the BS is capable of managing an SL resource.

When there is data to be transmitted to the UE in an RRC connected mode, an RRC message or a medium access control (MAC) control element (CE) may be used to transmit information notifying the BS that there is data to be transmitted to different UE(s). For example, the RRC message may be a message of SidelinkUEInformation, UEAssistanceInformation, or the like. In addition, the MAC CE may be an indicator reporting that the indicator is a buffer status report (BSR) for V2X communication, a BSR MAC CE, which includes at least one piece of information on a size of data buffered for SL communication, a scheduling request (SR), or the like. The mode-1 resource allocation method may be applied when the V2X Tx UE is located in the coverage of the BS, since an SL Tx UE is scheduled for a resource by the BS.

### (2) Mode-2 resource allocation

The mode-2 resource allocation implies a method in which an SL Tx UE autonomously selects a resource. More specifically, the mode-2 resource allocation is a method in which a BS provides a UE with an SL transmission/reception resource pool for SL through system information or an RRC message (e.g., an RRCReconfiguration message or a PC5-RRC message), and a Tx UE which has received the transmission/reception resource pool selects a resource pool and a resource according to a determined rule. Since the BS provides configuration information for the SL transmission/reception resource pool in the example above, the mode-2 resource allocation may be applied when the SL Tx UE and Rx UE are located in the coverage of the BS. When the SL Tx UE and Rx UE are located out of the coverage of the BS, the SL Tx UE and Rx UE may perform the mode-2 resource allocation in a preconfigured Tx/Rx resource pool. The UE autonomous resource selection method may include zone mapping, sensing-based resource selection, random selection, or the like.

(3) In addition, even if the UE is located in the coverage of the BS, the scheduled resource allocation method or the UE autonomous resource selection method may not be performed. In this case, the UE may perform SL communication through a preconfigured SL Tx/Rx resource pool.

Various embodiments of the disclosure may be applied to the SL resource allocation method according to an embodiment of the disclosure.

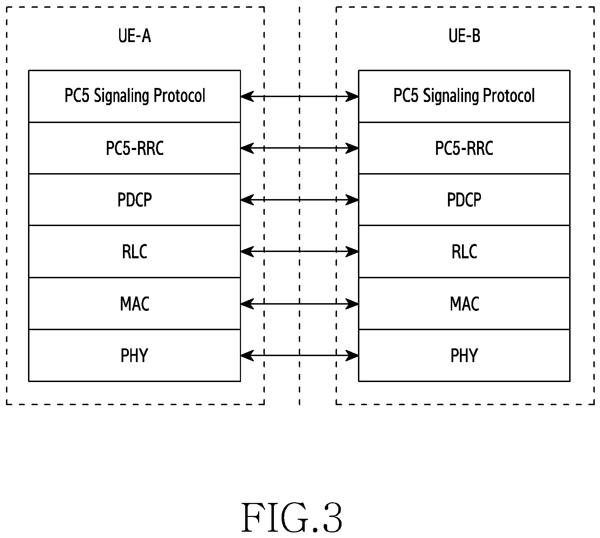

FIG. 3 illustrates a protocol of an SL UE according to an embodiment of the disclosure.

Although not shown in FIG. 3, application layers of a UE-A and UE-B may perform a service discovery. In this case, the service discovery may include a discovery regarding which SL communication scheme (unicast, groupcast, or broadcast) may be performed by each UE. Therefore, it may be assumed in FIG. 3 that the UE-A and the UE-B have recognized that the unicast communication method may be performed through the service discovery process performed in the application layer. The SL UEs may obtain information on a source identifier (ID) and destination ID for SL communication in the service discovery process.

Upon completion of the service discovery process, a PC-5 signaling protocol layer illustrated in FIG. 3 may perform a D2D direct link connection setup procedure. In this case, security setup information for D2D direct communication may be exchanged.

Upon completion of the D2D direct link connection setup, the D2D PC-5 RRC setup procedure may be performed in the PC-5 RRC layer of FIG. 3. In this case, information on capabilities of the UE-A and UE-B may be exchanged, and access stratum (AS) layer parameter information for unicast communication may be exchanged.

Upon completion of the PC-5 RRC setup procedure, the UE-A and the UE-B may perform unicast communication.

Although unicast communication has been described up to now as an example, such a procedure may be extended to groupcast communication. For example, when the UE-A, the UE-B, and a UE-C (not shown in FIG. 3) perform groupcast communication, the UE-A and the UE-B may perform the service discovery, D2D direct link setup, and PC-5 RRC setup procedure for unicast communication. In addition, the UE-A and the UE-C may also perform the service discovery, D2D direct link setup, and PC-5 RRC setup procedure for unicast communication. Further, the UE-B and the UE-C may also perform the service discovery, D2D direct link setup, and PC-5 RRC setup procedure for unicast communication. That is, instead of performing an additional PC-5 RRC setup procedure for groupcast communication, the PC-5 RRC setup procedure for unicast communication may be performed in a Tx UE and Rx UE pair participating in groupcast communication. However, in groupcast communication, the PC5 RRC setup procedure for a unicast communication may not always be performed. For example, there may be a scenario of groupcast communication performed without the PC5 RRC link setup. In this case, the PC5 link setup procedure for unicast transmission may be omitted.

The PC-5 RRC setup procedure for a unicast or a groupcast communication may be applied to all of the in-coverage, partial coverage, and out-of-coverage cases illustrated in FIG. 1. When UEs intending to perform a unicast or a groupcast communication are located in the coverage of the BS, the UEs may perform the PC-5 RRC setup procedure before or after performing DL or UL synchronization with the BS.

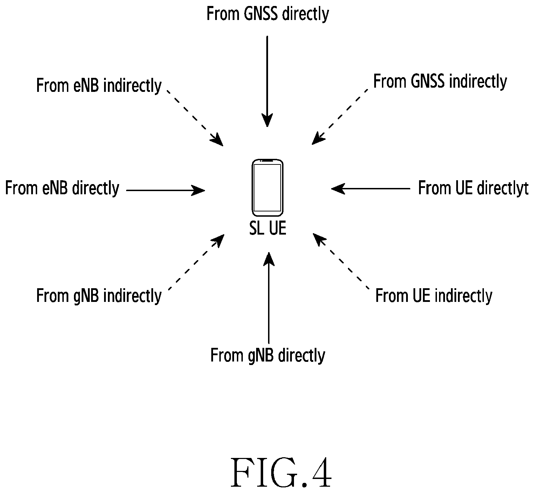

FIG. 4 illustrates a synchronization signal which may be received by an SL UE according to an embodiment of the disclosure.

Referring to FIG. 4, the following sidelink synchronization signal (SLSS) may be received from various sidelink synchronization sources.

In one embodiment, the SL UE may directly receive the synchronization signal from a global navigation satellite system (GNSS) or a global positioning system (GPS). In this case, the sidelink synchronization source may be the GNSS.

In one embodiment, the SL UE may indirectly receive the synchronization signal from the GNSS or the GPS. The receiving of the synchronization signal indirectly from the GNSS may include a case where an SL UE-A receives an SLSS transmitted by an SL UE-1 synchronized directly with the GNSS. In this case, the SL UE-A may receive the synchronization signal from the GNSS through 2-hops. As another example, an SL UE-2 synchronized with the SLSS transmitted by the SL UE-1 synchronized with the GNSS may transmit the SLSS. The SL UE-A which has received this may receive the synchronization signal from the GNSS through 3-hops. Similarly, the SL UE-A may also receive the synchronization signal from the GNSS through at least 3-hops. In this case, the sidelink synchronization source may be another SL UE synchronized with the GNSS.

In one embodiment, the SL UE may directly receive the synchronization signal from an LTE BS (i.e., eNB). More specifically, the SL UE may directly receive a primary synchronization signal (PSS)/secondary synchronization signal (SSS) transmitted from the LTE BS (i.e., eNB). In this case, the sidelink synchronization source may be the eNB.

In one embodiment, the SL UE may indirectly receive the synchronization signal from the LTE BS (i.e., eNB). The receiving of the synchronization signal indirectly from the eNB may include a case where an SL UE-A receives an SLSS transmitted by an SL UE-1 synchronized directly with the eNB. In this case, the SL UE-A may receive the synchronization signal from the eNB through 2-hops. As another example, an SL UE-2 synchronized with the SLSS transmitted by the SL UE-1 directly synchronized with the eNB may transmit the SLSS. The SL UE-A which has received this may receive the synchronization signal from the eNB through 3-hops. Similarly, the SL UE-A may also receive the synchronization signal from the eNB through at least 3-hops. In this case, the sidelink synchronization source may be another SL UE synchronized with the eNB.

In one embodiment, the SL UE may indirectly receive the synchronization signal from an NR BS (i.e., gNB). The receiving of the synchronization signal from the gNB may include a case where an SLSS transmitted by the SL UE-1 directly synchronized with the gNB is received by another SL UE-A. In this case, the SL UE-A may receive the synchronization signal from the gNB through 2-hops. As another example, an SL UE-2 synchronized with the SLSS transmitted by the SL UE-1 directly synchronized with the gNB may transmit the SLSS. The SL UE-A which has received this may receive the synchronization signal from the gNB through 3-hops. Similarly, the SL UE-A may also receive the synchronization signal from the gNB through at least 3-hops. In this case, the sidelink synchronization source may be another SL UE synchronized with the gNB.

In one embodiment, the SL UE-A may directly receive the synchronization signal from another SL UE-B. When the SL UE-B as another synchronization source does not detect the SLSS transmitted from the GNSS, the gNB, the eNB, or another SL UE, the SL UE-B may transmit the SLSS, based on a timing thereof. The SL UE-A may directly receive the SLSS transmitted by the SL UE-B. In this case, the sidelink synchronization source may be the SL UE.

In one embodiment, the SL UE-A may indirectly receive the synchronization signal from another SL UE-B. The receiving of the synchronization signal indirectly from the SL UE-B may include a case where an SL UE-A receives an SLSS transmitted by an SL UE-1 synchronized directly with the SL UE-B. In this case, the SL UE-A may receive the synchronization signal from the SL UE-B through 2-hops. As another example, an SL UE-2 synchronized with the SLSS transmitted by the SL UE-1 directly synchronized with the SL UE-B may transmit the SLSS. The SL UE-A which has received this may receive the synchronization signal from the SL UE-B through 3-hops. Similarly, the SL UE-A may also receive the synchronization signal from the SL UE-B through at least 3-hops. In this case, the sidelink synchronization source may be another SL UE synchronized with the SL UE.

The SL UE may receive the synchronization signal from the aforementioned various synchronization sources, and may perform synchronization on a synchronization signal transmitted from a high-priority synchronization source according to a preconfigured priority.

In an embodiment, the following priority may be preconfigured in order from a synchronization signal of a high priority to a synchronization signal of a low priority.

### - Case A:

1) a synchronization signal transmitted from a GNSS;
2) a synchronization signal transmitted by a UE performing synchronization directly from the GNSS;
3) a synchronization signal transmitted by a UE performing synchronization indirectly from the GNSS;
4) a synchronization signal transmitted from an eNB/gNB);
5) a synchronization signal transmitted by the UE performing synchronization directly from the eNB/gNB;
6) a synchronization signal transmitted by the UE performing synchronization indirectly from the eNB/gNB; and
7) a synchronization signal transmitted by the UE not performing synchronization directly or indirectly to the GNSS or eNB/gNB.

The case A is an example of a case where the synchronization signal transmitted by the GNSS has a top priority. Unlike this, a case where the synchronization signal transmitted by the eNB/gNB has the top priority may be considered, and the following priority may be preconfigured.

### - Case B:

1) a synchronization signal transmitted from an eNB/gNB;
2) a synchronization signal transmitted by a UE performing synchronization directly from the eNB/gNB;
3) a synchronization signal transmitted by a UE performing synchronization indirectly from the eNB/gNB;
4) a synchronization signal transmitted from a GNSS);
5) a synchronization signal transmitted by the UE performing synchronization directly from the GNSS;
6) a synchronization signal transmitted by the UE performing synchronization indirectly from the GNSS; and
7) a synchronization signal transmitted by the UE not performing synchronization directly or indirectly to the GNSS or eNB/gNB.

Whether the SL UE may conform to the priority of the case A or the priority of the case B may be configured from a BS or may be preconfigured. More specifically, when the SL UE is located in the coverage of the BS, the BS may configure whether the SL UE may conform to the priority of the case A or case B through system information (SIB) or an RRC signaling. When the SL UE is located out of the coverage of the BS, the BS may pre-configure whether the SL UE may perform an SL synchronization procedure according to which priority out of the priority of the case A and the priority of case B.

Meanwhile, when the BS configures the priority of the case A to the SL UE through system information or RRC signaling, the BS may additionally configure whether to consider a priority 4 (when synchronized with a synchronization signal transmitted from the eNB/gNB), a priority 5 (when synchronized with a synchronization signal transmitted by a UE performing synchronization directly from the eNB/gNB), and a priority 6 (when synchronized with a synchronization signal transmitted by a UE performing synchronization indirectly from the eNB/gNB). That is, when the case A is configured and additionally configured to consider the priority 4, the priority 5, and the priority 6, or is used after being configured, all priorities (i.e., from the priority 1 to the priority 7) of the case A may be considered. Unlike this, when the case A is configured and when the case A is not configured to consider the priority 4, the priority 5, and the priority 6, or when the case A is configured and when the case A is configured to consider the priority 4, the priority 5, and the priority 6 but the case A is configured not to use the priority 4, the priority 5, and the priority 6, the priority 4, the priority 5, and the priority 6 may be omitted in the case A (i.e., only the priority 1, the priority 2, the priority 3, and the priority 7 are considered).

The SLSS mentioned in this specification may imply a sidelink synchronization signal block (S-SSB). The S-SSB may be constructed of a sidelink primary synchronization signal (S-PSS), a sidelink secondary synchronization signal (S-SSS), and a physical sidelink broadcast channel (PSBCH). In this case, the S-PSS may be constructed of a Zadoff-Chu sequence or an M-sequence, and the S-SSS may be constructed of an M-sequence or a gold sequence. Similarly, to a PSS/SSS in a cellular system, an SL ID may be transmitted through a combination of the S-PSS and the S-SSS or only the S-SSS other than the combination of the two. Similarly, to a physical broadcast channel (PBCH) of the cellular system, the PSBCH may transmit master information (i.e., a master information block (MIB)) for SL communication.

When an SL parameter is preconfigured in the SL UE in the disclosure, a scenario (i.e., an out-of-coverage scenario) in which the SL UE is located out of the coverage of the BS may be mainly applied. In this case, the preconfiguring of the parameter to the UE may be interpreted as using a value embedded in the UE when the UE is produced. In addition, it may be interpreted that the SL UE accesses the BS and uses a value stored by obtaining the SL parameter information in advance through RRC configuration. In addition, it may be interpreted that the SL UE does not access the BS but uses the value stored by obtaining the SL system information in advance from the BS.

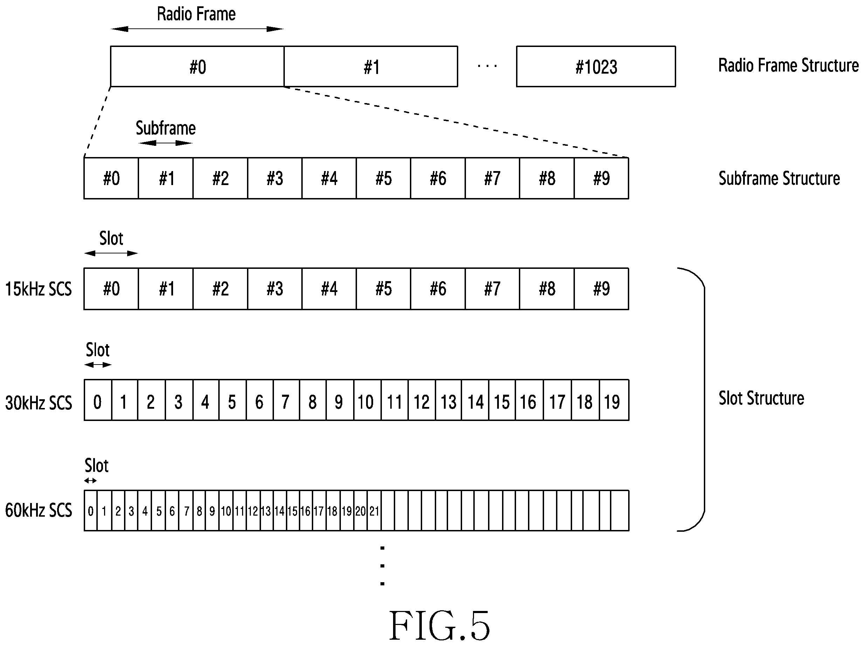

FIG. 5 illustrates a frame structure of an SL system according to an embodiment of the disclosure.

Although it is exemplified in FIG. 5 that the system operates 1024 radio frames, the disclosure is not limited thereto. For example, the system may operate less than or more than 1024 radio frames, and how many radio frames are operated by the system may be configured from a BS or may be preconfigured. More specifically, when the SL UE is located in the coverage of the BS, the SL UE may obtain information on the radio frame through an MIB of a PBCH transmitted by the BS. When the SL UE is located out of the coverage of the BS, the information on the radio frame may be preconfigured in the SL UE.

A radio frame number and a system frame number may be treated equally in FIG. 5. That is, a radio frame number "0" may correspond to a system frame number "0," and a radio frame number "1" may correspond to a system frame number "1." One radio frame may be constructed of 10 subframes, and one subframe may have a length of 1ms on a time axis. In an NR V2X communication system, the number of slots constituting one subframe may vary depending on a subcarrier spacing in use as shown in FIG. 5. For example, when using a 15kHz subcarrier spacing in the NR V2X communication system, one subframe may be identical to one slot. However, one subframe may be identical to two slots and four slots, respectively, when using a 30 kHz subcarrier spacing and a 60 kHz subcarrier spacing in the NR V2X communication system.

Although not shown in FIG. 5, this may also be applied when at least a 120kHz subcarrier spacing is used. That is, the number of slots constituting one subframe may be generalized such that the number of slots constituting one subframe may increase to 2n (where n = 0 , 1, 2, 3,...) along with an increase in a subcarrier spacing with respect to the 15kHz subcarrier spacing.

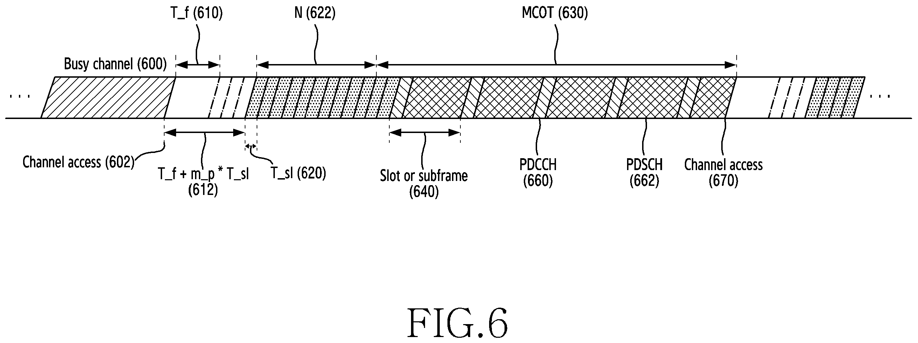

FIG. 6 illustrates a channel access procedure in an unlicensed band in a wireless communication system according to embodiments of the disclosure.

A situation in which a BS performs the channel access procedure to occupy the unlicensed band is described. According to FIG. 6, the BS intending to transmit a DL signal through the unlicensed band may perform the channel access procedure for the unlicensed band for a minimum time T_f + m_p*T_sl (e.g., a defer duration 612 of FIG. 6). T_f is an initial defer duration value, and may be utilized to identify whether a channel is in an idle state. T_sl is the channel access attempt duration, and m_p is a channel accessible count. If the BS intends to perform the channel access procedure with a channel access priority class of 3 (p=3), a size of T_f + m_p*T _sl may be configured by using m_p for a size of T_f + m_p*T_sl of a defer duration required to perform the channel access procedure. Herein, T_f is a value fixed to 16us (e.g., a duration 610 of FIG. 6). A time T_sl which comes first in the duration may be an idle state, and the BS may not perform the channel access procedure for the time T_f - T_sl remaining in the time T-f after the time T_sl. In this case, even if the BS performs the channel access procedure at the remaining time T_f - T_sl, channel access may not be achieved. In other words, the time T_f - T_sl is a time in which the channel access procedure is performed in the BS.

If the entire time m_p*T_sl is the idle state, N may be N-1. In this case, N may be selected to be any integer value in the range of 0 and the contention duration value CW_p at a timing of performing the channel access procedure. In case of the channel access priority class 3, a minimum contention duration value and a maximum contention duration value are respectively 15 and 63. If it is determined that an unlicensed band in a defer duration and an additional duration in which the channel access procedure is performed is an idle state, the BS may transmit a signal through the unlicensed band for a time T_mcot,p (8ms). For convenience of explanation, the disclosure describes embodiments, based on a DL channel access priority class. In an UL case, the channel access priority class of Table 1 may be used in the same manner, or an additional channel access priority class for UL signal transmission may be used.

**Table 1**

| Channel Access Priority Class (*p*) | *mₚ* | *CW*_{min,*p*} | *CW*_{max*,p*} | *T*_{mcot,*p*} | allowed *CW*ₚ sizes |
|---|---|---|---|---|---|
| 1 | 1 | 3 | 7 | 2ms | {3, 7} |
| 2 | 1 | 7 | 15 | 3ms | {7, 15} |
| 3 | 3 | 15 | 63 | 8 or 10ms | {15, 31, 63} |
| 4 | 7 | 15 | 1023 | 8 or 10ms | {15, 31, 63, 127, 255, 511, 1023} |

The initial contention duration value CW_p is a minimum value CW_min,p of the contention duration. The BS which has selected the value N may perform the channel access procedure in the duration T_sl (e.g., a slot duration 620 of FIG. 6), and when the unlicensed band is determined as an idle state through the channel access procedure performed in the duration T_sl, may change the value N to a value N-1, and when N=0, may transmit a signal through the unlicensed band for a maximum time T_mcot,p (e.g., a maximum occupancy time 630 of FIG. 6). If the unlicensed band determined through the channel access procedure at the time T_sl is not the idle state, the BS may perform the channel access procedure again without having to change the value N.

A contention duration value CW_p may be changed or maintained in size according to a NACK ratio Z of reception results (ACK/NACK) for DL data transmitted or reported by one or more UEs, which have received DL data through a DL data channel, to the BS, in other words, DL data received in a reference subframe or a reference slot or a reference transmission duration (i.e., a reference transmit time interval (TTI)). In this case, the reference subframe, the reference slot, or the reference TTI may be determined based on any one of a timing at which the BS starts the channel access procedure, a timing at which the BS selects the value N to perform the channel access procedure, a first subframe, slot, or TTI of a transmission duration (or a maximum channel occupancy time (MCOT)) of a DL signal most recently transmitted by the BS immediately before the two timings through an unlicensed band, and a start subframe, slot, or TTI of the transmission duration.

Referring to FIG. 6, the BS may attempt channel access to occupy the unlicensed band. A first slot (or a start slot initiating a channel occupancy duration), subframe, or TTI 640 of a transmission duration (or MCOT) 630 of a DL signal most recently transmitted by the BS through the unlicensed band at timings 602 and 670 at which the channel access procedure starts or a timing, or immediately before the timing, at which the BS selects a value N 622 to perform the channel access procedure may be defined as a reference slot, a reference subframe, or a reference TTI. For convenience of explanation, the reference slot is taken for example in the following description.

For example, one or more consecutive slots, including a first slot, in which a signal is transmitted among all slots of the DL signal transmission duration 630 may be defined as the reference slots. In addition, according to an embodiment, if the DL signal transmission duration starts after a first symbol of the slot, a slot in which DL signal transmission starts and a slot next to that slot may be defined as the reference slots. If a NACK ratio of reception results for DL data transmitted or reported to the BS by one or more UEs which have received DL data transmitted through a DL data channel in this reference slot is greater than or equal to Z, the BS may determine a value or size of a contention duration used in a channel access procedure 670 of the BS to be a contention duration which is next greatest to the contention duration used in the previous channel access procedure 602. In other words, the BS may increase the size of the contention duration used in the channel access procedure 602. The BS may perform the next channel access procedure 670 by selecting the value N 622 in a range defined depending on the contention duration of the increased size.

If the BS is not able to obtain a reception result for a DL data channel transmitted in the reference channel of the transmission duration 630, for example, if a time interval between the reference slot and the timing at which the BS starts the channel access procedure is less than or equal to n slots or symbols (in other words, if the BS starts the channel access procedure before a minimum time for which a UE is capable of reporting to the BS the reception result for the DL data channel transmitted in the reference slot), a first slot of a transmission duration in which a DL signal most recently transmitted before the DL signal transmission duration 630 may be the reference slot.

In other words, if a reception result for DL data transmitted at the timing 670 at which the BS starts the channel access procedure or at the timing at which the BS selects the value N to perform the channel access procedure or in the reference slot 640 immediately before the timing is not received from the UE, the BS may determine the contention duration by using the reception result of the DL data of the UE with respect to the reference slot in the transmission duration of the DL signal most recently transmitted, among reception results for DL data channels previously received from the UEs. In addition, the BS may determine a size of the contention duration used in the channel access procedure 670 by using a DL data reception result received from the UE with respect to the DL data transmitted through the DL data channel in the reference slot.

For example, the BS which has transmitted the DL signal through the channel access procedure (e.g., CW_p=15) configured according to the channel access priority class 3 (p=3) may increase the contention duration from an initial value (CW_p=15) to a next contention duration value (CW_p=31), if at least 80% of reception results of the UE with respect to the DL data transmitted to the UE through the DL data channel in the reference slot among the DL signals transmitted through the unlicensed band are determined to be NACK. A ratio value of 80% is for exemplary purposes, and various modifications are possible.

If at least 80% of reception results of the UE are not determined to be NACK, the BS may maintain the contention duration value to be the existing value or may change the value to an initial value of the contention duration. In this case, the change of the contention duration may be applied commonly to all channel access priority classes, or may be applied to only a channel access priority class used in a specific channel access procedure. In this case, in the reference slot in which the change of the contention duration size is determined, a value Z for determining the change of the contention duration size among reception results for DL data transmitted or reported by the UE to the BS with respect to the DL data transmitted through the DL data channel may be determined by using the following method.

If the BS transmits at least one codeword (CW) or TB to at least one UE in the reference slot, the BS may determine the value Z to be a NACK ratio among reception results transmitted or reported by the UE, with respect to the TB received by the UE in the reference slot. For example, when two CWs or two TBs are transmitted to one UE in the reference slot, the BS may receive or be reported a reception result of a DL data signal for the two TBs from the UE. If the NACK ratio Z of two reception results is greater than or equal to a threshold (e.g., Z=80%) predefined or configured between the BS and the UE, the BS may change or increase the contention duration size.

In this case, if the UE transmits or reports reception results of DL data for one or more slots (e.g., M slots), including the reference slot, to the BS by bundling the results, the BS may determine that the UE has transmitted M reception results. In addition, the BS may determine the value Z to be the NACK ratio among the M reception results, and may change, maintain, or initialize the contention duration size.

If the reference slot is a second slot of two slots included in one subframe, or if a DL signal is transmitted starting from a symbol after the first symbol in the reference slot, the reference slot and a next slot may be determined as the reference slot, and the value Z may be determined to be the NACK ratio among reception results transmitted or reported by the UE to the BS, with respect to DL data received in the reference slot.

In addition, when scheduling information or DL control information for a DL data channel transmitted by the BS is transmitted in the same cell or frequency band as a cell or frequency band in which the DL data channel is transmitted, or when the scheduling information or DL control information for the DL data channel transmitted by the BS is transmitted through an unlicensed band and transmitted in a cell or frequency different from the cell in which the DL data channel is transmitted, if it is determined that the UE does not transmit the reception result for the DL data received in the reference slot, or if the reception result for the DL data transmitted by the UE is determined to be discontinuous transmission (DTX), NACK/DTX, or any state, the BS may determine the value Z by determining the reception result of the UE to be NACK.

In addition, when the scheduling information or DL control information for the DL data channel transmitted by the BS is transmitted through a licensed band, if the reception result for the DL data transmitted by the UE is determined to be at least one of DTX, NACK/DTX, or any state, the BS may not reflect the reception result of the UE to the reference value Z of the contention duration change. In other words, the BS may determine the value Z while ignoring the reception result of the UE.

In addition, when the BS transmits the scheduling information or DL control information for the DL data channel through the licensed band, if no transmission is performed on the DL data in practice by the BS among reception results of the DL data for the reference slot transmitted or reported to the BS, the BS may determine the value Z while ignoring the reception result transmitted or reported by the UE with respect to the DL data.

In addition, instead of the reference slot, a reference duration may be considered and applied in a 5G NR communication system. The reference duration may be regarded as a duration from a timing at which a channel occupancy time (COT) starts to a last timing of a first slot in which at least one unicast PDSCH is transmitted and received on a scheduled resource without puncturing. Alternatively, a duration from a timing at which the COT starts to a last timing of a first transmission burst in which at least one unicast PDSCU is included without puncturing in a scheduled resource may be regarded as the reference duration. In addition, in case of the TB-based transmission scheme, if an HARQ-ACK value for at least one unicast PDSCH in the reference duration is ACK, the UE may determine the contention duration size to be a minimum value, and otherwise, may further increase the contention duration size value by 1. In case of the CBG-based transmission scheme, if a ratio of HARQ-ACK information values to PDSCHs in the reference duration is greater than or equal to at least 10%, the UE may determine the contention duration size to be a minimum value, and otherwise, may further increase the contention duration size value by 1.

In a DL case, the adjusting of the contention duration size of the BS may be determined by using CBG-based HARQ-ACK information or non-unicast data information or data transmission not based on a slot or a no-transmission event in which scheduling is achieved but transmission is not performed in practice, or the like. For example, when the CBG-based HARQ-ACK information transmission is configured, the ACK or NACK information may be used to determine the value Z by individually considering HARQ-ACK information per CBG. In addition, in case of the non-unicast data information, since there is no HARQ-ACK information transmission, when determining the ACK or NACK information thereon, it may always be determined to be ACK or NACK or may be determined to be information other than both of them. When it is said that the ACK/NACK information is not determined, it means that, since feedback information for corresponding unicast data information is not usable, the value Z is not determined by considering this.

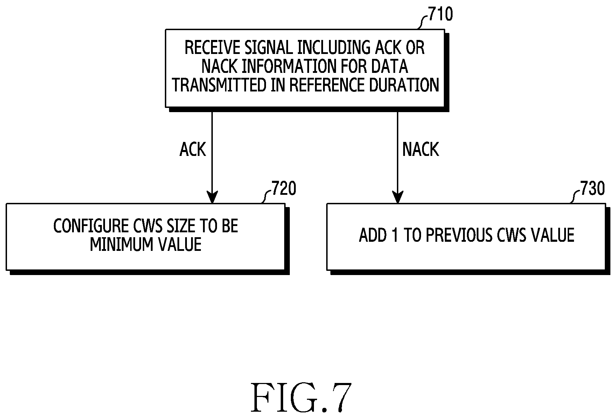

In an UL case, the adjusting of the contention duration size of the UE is similar to the adjusting of the contention duration size of the BS in the DL case. However, when determining the reference duration, not the unicast PDSCH but the unicast PUSCH may be considered. Therefore, in case of HARQ-ACK information, the HARQ-ACK information explicitly indicated through the BS may be used or it may be determined implicitly through a new data indicator (NDI) included in DCI for scheduling the PUSCH. For example, if a 1-bit NDI value is toggled to be different from before with respect to a specific HARQ process number, the UE may determine that transmission of a previously transmitted PUSCH is a success (ACK), and if it is not toggled, the UE may determine that transmission of the previously transmitted PUSCH is a failure (NACK). Being toggled implies that the NDI value has changed from 1 to 0 or from 0 to 1, and being not toggled implies that the NDI value is continued to be 1 without being changed from 1 or is continued to be 0 without being changed from 0. This will be described with reference to FIG. 7.

FIG. 7 illustrate a flowchart of a method for adjusting a contention window size (CWS) for channel access of a UE according to an embodiment of the disclosure.

Referring to FIG. 7, first, in step 710, a signal including ACK or NACK information for data transmitted in a reference duration is received. When HARQ-ACK information for a PUSCH previously transmitted in the determined reference duration is available, the UE determines a contention duration size to be a minimum value in step 720 if the information is ACK, and further increases a value of the contention duration size by 1 in step 730 if the information is NACK. In addition, the HARQ-ACK information for the PUSCH previously transmitted in the determined reference duration may not always be available. Therefore, in this case, if transmission of the PUSCH is initial transmission or if the PUSCH is transmitted for the reference duration, the UE applies the contention duration size to be the same as a contention duration size used immediately before. Otherwise, if the transmission of the PUSCH is retransmission, the UE further increases the contention duration size value by 1.

A channel access procedure in an unlicensed band may be classified according to whether a starting timing of the channel access procedure of a communication device is fixed (i.e., frame-based equipment (FBE)) or variable (load-based equipment (LBE)). In addition to the starting timing of the channel access procedure, the communication device may be determined as an FBE device or an LBE device according to whether a transmit/receive structure of the communication device has one cycle or does not have one cycle. Herein, when it is said that the starting timing of the channel access procedure is fixed, it may imply that the channel access procedure of the communication device may start cyclically according to a predefined cycle or a cycle declared or configured by the communication device.

As another example, when it is said that the starting timing of the channel access procedure is fixed, it may imply that a transmit or receive structure of the communication device has one cycle. Herein, when it is said that the starting timing of the channel access procedure is variable, it may imply that the starting timing of the channel access procedure of the communication device is possible any time when the communication device intents to transmit a signal through the unlicensed band. As another example, when it is said that the starting timing of the channel access procedure is variable, it may imply that the transmit or receive structure of the communication device does not have one cycle and may be optionally determined.

The channel access procedure in the unlicensed band may include a procedure in which the communication device measures strength of a signal received through the unlicensed band for a fixed time or a time calculated according to a predefined rule (e.g., a time calculated through at least one random value selected by the BS or the UE), and compares this with a threshold calculated by a function of determining received signal strength according to at least one of variables, i.e., a predefined threshold, a channel bandwidth, a signal bandwidth through which a to-be-transmitted signal is transmitted, and/or strength of transmit power, to determine whether the unlicensed band is in an idle state.

For example, the communication device may measure strength of a signal received during a time Xux (e.g., 25us) immediately before a timing of transmitting a signal, and if the measured signal strength is less than a predefined or calculated threshold T (e.g., -72dBm), may determine that the unlicensed band is in the idle state and may transmit a set signal. In this case, after the channel access procedure, a maximum time for which continuous signal transmission is possible may be limited based on a maximum channel occupancy time (MCOT) defined for each country, region, and frequency band according to each unlicensed band. In addition, the aforementioned maximum time may also be limited based on a type of the communication device (e.g., the BS, the UE, a master device, or a slave device). For example, in case of Japan, the BS or the UE may transmit a signal by occupying a channel without having to perform an additional channel access procedure for up to 4ms, with respect to an unlicensed band determined to be in an idle state after performing the channel access procedure in a 5GHz unlicensed band.

More specifically, when the BS or the UE intends to transmit a DL or UL signal through the unlicensed band, a channel access procedure which may be performed by the BS or the UE may be classified into the following types:
- Type 1: The UL/DL signal is transmitted after the channel access procedure is performed for a variable time;
- Type 2: The UL/DL signal is transmitted after the channel access procedure is performed for a fixed time; and
- Type 3: The DL or UL signal is transmitted without having to perform the channel access procedure.

A transmitting device (e.g., a BS or a UE) intending to transmit a signal through an unlicensed band may determine a type (or a category) of a channel access procedure according to a type of the signal to be transmitted. In 3GPP, an LBT procedure which is a channel access type may be roughly classified into 4 categories. The 4 categories may include a first category in which LBT is not performed, a second category in which LBT is performed without random backoff, a third category in which LBT is performed through random backoff in a fixed-sized contention window, and a fourth category in which LBT is performed through random backoff in a variable-sized contention window.

According to an embodiment, the third category and the fourth category may be exemplified in case of the type 1, the second category may be exemplified in case of the type 2, and the first category may be exemplified in case of the type 3. Herein, the type 2 or second category in which the channel access procedure is performed for the fixed time may be classified into one or more types according to a fixed time in which the channel access procedure is performed. For example, the type 2 may be classified into a type (a type 2-1) in which the channel access procedure is performed for a fixed time Aµs (e.g., 25us) and a type (e.g., a type 2-2) in which the channel access procedure is performed for a fixed time Bµs (e.g., 16us).

Although DL in which the BS transmits a signal to the UE or UL in which the UE transmits a signal to the BS have been mainly described up to now, the disclosure may also be sufficiently applicable to SL in which the UE transmits a signal to another UE.

Hereinafter, for convenience of explanation, the transmitting device is assumed to be the BS or the UE in the disclosure, and the transmitting device and the BS may be used interchangeably. In addition, the SL may be assumed instead of the DL. In this case, the BS may be applied by being replaced with the UE.

For example, when the BS intends to transmit a DL signal including a DL data channel through an unlicensed band, the BS may perform the type-1 channel access procedure. In addition, when the BS intends to transmit a DL signal not including the DL data channel through the unlicensed band, for example, when intending to transmit a synchronization signal or the DL control channel, the BS may perform the type-2 channel access procedure and transmit the DL signal.

In this case, the type of the channel access procedure may be determined according to a transmission length of a signal to be transmitted through the unlicensed band and a length of a time or duration of occupying and using the unlicensed band. In general, the type-1 channel access procedure may be performed for a longer time than the type-2 channel access procedure. Therefore, when the communication device intends to transmit a signal for a short time duration or for a time leas than or equal to a reference time (e.g., Xms or Y symbols), the type-2 channel access procedure may be performed. On the other hand, when the communication device intends to transmit a signal for a long time duration or a time greater than or equal to a reference time (e.g., Xms or Y symbols), the type-1 channel access procedure may be performed. In other words, different types of channel access procedures may be performed according to a usage time of the unlicensed band.

If the transmitting device performs the type-1 channel access procedure according to at least one of the aforementioned criteria, the transmitting device intending to transmit a signal through the unlicensed band may determine a channel access priority class (or a channel access priority) according to a quality of service class identifier (QCI) of a signal to be transmitted through the unlicensed band, and may perform a channel access procedure by using at least one value among setup values predefined as shown in Table 1 for the determined channel access priority class. Table 1 shows a mapping relation between the channel access priority class and the QCI. In this case, the mapping relation between the channel access priority class and the CQI as shown in Table 1 is only an example, and the disclosure is not limited thereto.

For example, QCIs 1, 2, and 4 imply CQI values for a service such as conversational voice, conversational video (live streaming), and non-conversational video (buffered streaming), respectively.

Alternatively, a type of performing the channel access procedure may vary depending on whether the transmitting device supports LBE or supports FBE. For example, the transmitting device supporting the LBE may perform at least one of channel access methods of the types 1 to 3, whereas the transmitting device supporting the FBE may perform the type-2 channel access method.

Alternatively, the transmitting device may apply different types of channel access methods according to a specific situation. For example, the transmitting device may use the type-1 channel access method to start channel occupancy (i.e., MCOT). As another example, after the transmitting device occupies a channel, different transmission bursts are present in a duration in which the channel is occupied, and if a gap of these bursts is greater than or equal to Xus (e.g., 16us), the transmitting device may use the type-2 channel access method. As another example, after the transmitting device occupies the channel, if the gap between the different transmission bursts in the duration in which the channel is occupied is less than or equal to Xus (e.g., 16us) and if a total length of a second burst is Yus (e.g., 584us), the transmitting device may use the type-3 channel access method. The transmission burst may be at least one of DL or UL or SL synchronization/control/data channels. The transmission burst may imply an aggregation of channels continuously concatenated from a perspective of time resources.

In the following description, a communication device and a UE are used as the same concept and may be used interchangeably. A transmitting end implies a communication device which transmits data, and a receiving end implies a communication device which receives data. In addition, the transmitting end may imply a communication device which occupies a channel for data transmission, and the receiving end may imply a communication device which transmits a corresponding feedback to the transmitting end when an HARQ-ACK feedback is sent according to data reception.

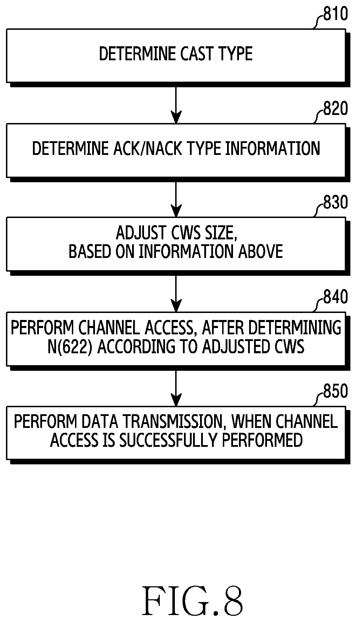

FIG. 8 illustrate a flowchart of a method for adjusting a CWS for SL-based channel access in an unlicensed band of a UE according to a first embodiment of the disclosure.

As partially described in FIG. 2A and FIG. 2B, there are roughly three cast types for signal delivery in SL, and the cast types include unicast, broadcast, and groupcast. In addition, in SL communication, there are roughly three HARQ-ACK feedback transmission types for SL data reception. The HARQ-ACK feedback transmission types may include a first HARQ-ACK feedback transmission type in which ACK or NACK information is transmitted, a second HARQ-ACK feedback transmission type in which only NACK information is transmitted, and a third HARQ-ACK feedback transmission type in which there is no HARQ-ACK feedback transmission.

The first HARQ-ACK feedback transmission type may be supportable in unicast or groupcast-based SL communication. In a unicast case, since it is a communication between one UE and another UE, ACK or NACK information may be transmitted through a preconfigured resource with respect to SL data received by one communication device. In a groupcast case, since it is a communication between one UE and a plurality UEs, ACK or NACK information is transmitted through a preconfigured resource with respect to SL data received by each communication device. In this case, the resource may be identified in advance through identification information for each communication device to perform transmission. Therefore, the communication device which receives the ACK or NACK information may identify and receive ACK or NACK information transmitted from the plurality of UEs. The second HARQ-ACK feedback transmission type may be supportable in groupcast-based SL communication.

Unlike the first HARQ-ACK feedback transmission type, the second HARQ-ACK feedback transmission type is characterized in that a communication device which has received SL data transmits corresponding feedback information in case of NACK, and the communication device transmits no information in case of ACK. Therefore, for the same SL data received by a plurality of transmission devices in a groupcast situation, unlike the first HARQ-ACK feedback transmission type, the second HARQ-ACK transmission type may be used to transmit NACK information through common resource information. Although the communication device which receives corresponding NACK information is not able to determine which communication device has not properly received SL data, whether at least one UE in the groupcast has not properly received SL data may be determined. Therefore, the second HARQ-ACK feedback transmission type provides less accurate feedback information than the first HARQ-ACK feedback transmission type, but a resource used in a feedback may be reduced in a specific situation such as the groupcast.

The third HARQ-ACK feedback transmission type is a method in which an HARQ-ACK feedback is not transmitted, and may be supported in unicast, groupcast, or broadcast-based SL communication. Although there is an advantage in that a feedback resource is not used, whether information of data transmitted and received through SL is properly delivered to the receiving end is not recognizable from a perspective of the transmitting end.

In an unlicensed band, SL communication may support all of unicast, groupcast, and broadcast-based communications, or may support only some of them. In addition, each cast type may be indicated as a cast type for an SL signal transmitted and received through the unlicensed band by using a higher signal, an L1 signal, an L2 signal, or a combination thereof. For example, an SCI field indicating the cast type may be present in control information, and a structure of the SCI field may be specified in the 3GPP standard or a specific field value may be configured by a higher signal. There may be 2-bit SCI field information, which may indicate unicast information if 00, groupcast information if 01, and broadcast information if 02. Alternatively, there may be 1-bit SCI field information, which indicates a first cast type if 0 and a second cast type if 1. The first cast type and the second cast type may be preconfigured as at least one of unicast, groupcast, and broadcast by using a higher layer.

Alternatively, similarly to the cast type indication, the HARQ-ACK feedback transmission type may also indicate the HARQ-ACK feedback transmission type for the SL signal transmitted and received through the unlicensed band by using the higher signal, the L1 signal, the L2 signal, or the combination thereof. For example, an SCI field indicating the HARQ-ACK feedback information transmission type may be present in control information, and a structure of the SCI field may be specified in the 3GPP standard or a specific field value may be configured by a higher signal. There may be 2-bit SCI field information, which may indicate a first HARQ-ACK feedback transmission type if "00," a second HARQ-ACK feedback transmission type if "01," and a third HARQ-ACK feedback transmission type if "10." Alternatively, there may be 1-bit SCI field information, which indicates a feedback type A if 0 and a feedback type B if "1." The type A and the type B may be preconfigured as at least one of the first HARQ-ACK feedback transmission type, the second HARQ-ACK feedback transmission type, and the third HARQ-ACK feedback transmission type.

Alternatively, the HARQ-ACK feedback transmission type and the cast type for SL communication may be indicated together. This may be indicated by using the higher signal, the L1 signal, the L2 signal, or the combination thereof. For example, assuming that there is 3-bit SCI field information, it may indicate the first HARQ-ACK feedback type and the unicast if "000," the first HARQ-ACK feedback transmission type and the groupcast if "001," the second HARQ-ACK feedback transmission type and the groupcast if "010," the third HARQ-ACK feedback transmission type and the unicast if "011," the third HARQ-ACK feedback transmission type and the groupcast if "100," and the third HARQ-ACK feedback transmission type and the broadcast if "101." This is only one example, and an ACI field having a different bit size, a cast type indicated by each bitmap, and a combination of feedback transmission types may be different, which may be additionally configured by a higher layer.

Summarizing this with reference to FIG. 8, the transmitting end determines a cast type in step 810, and determines an HARQ-ACK information transmission type in step 820. Thereafter, in step 830, a contention duration value (i.e., CWS or CW_p) is determined according to at least one of methods described below. In step 840, the transmitting end selects the value N 622 in the range of [0, determined CW_p]. In step 850, the transmitting end performs channel access. If a result of channel sensing is an idle state for all N times, the transmitting end may perform control and data transmission. The procedure of the transmitting end described in FIG. 8 is only an example, and may operate by omitting some of the steps or by changing the order.

As described above, when SL-based communication is performed in the unlicensed band, the communication device may occupy a channel for the SL communication and then perform data communication. Therefore, the channel may be occupied first, and in general, the contention duration value Cw_p may be adaptively adjusted through the type-1 channel access procedure to determine whether the channel is idle. In this case, a scheme of adjusting the contention duration and determining the reference duration for adjusting the contention duration may vary depending on various cast types and HARQ-ACK feedback transmission types. Hereinafter, such cases will be described in detail. In addition, in the following description, the contention duration value or the contention duration size value serves as a range for determining the value N 622.

In one embodiment, a first transmission type of HARQ-ACK feedback information is provided.

In case of the first transmission type of HARQ-ACK feedback information, ACK or NACK information may be utilized irrespective of unicast or multicast-based SL communication to adjust a contention duration. Specifically, a communication device which intends to configure the contention duration for channel occupancy may adjust or maintain a contention duration value used immediately before by considering ACK or NACK information determined through the reference duration. At least one of a first slot in a duration in which a channel is occupied immediately before channel occupancy, a first slot after all resources of a PSCCH/PSSCH are completely transmitted and received, a first slot in which all scheduled resources of the PSCCH/PSCCH are completely transmitted and received, a duration from a channel occupancy start timing to a last symbol timing of a first PSCCH/PSSCH, and slots in which the first PSCCH/PSSCH requiring first HARQ-ACK feedback information is transmitted may be considered as the reference duration. However, the reference duration is not limited to these embodiments, and may be determined variously. For example, the reference duration may be determined by considering SL synchronization or control or data signals and HARQ-ACK feedback type or transmit power of the UE or a frequency or time resource region or the like in which SL transmission/reception is performed.

According to a feedback of the receiving end for SL data transmitted/received in the reference duration, the transmitting end may adjust the contention duration for channel occupancy by considering at least one or two of the following embodiments. In addition, a range of a minimum or maximum value for the contention duration may be determined according to a priority of data transmitted by the transmitting end, or may be determined when a resource pool for SL is preconfigured. However, the contention duration is not limited to these embodiments, and may be determined variously. For example, it may be determined according to a channel occupancy duration length of a channel to be occupied by the transmitting end, a cast type, an HARQ-ACK feedback information transmission type, location information of the transmitting end, or the like. In addition, the contention duration may also be determined by combining at least one or two embodiments described below.

According to the invention, the transmitting end may receive HARQ-ACK feedback information for a PSSCH transmitted and received in a reference duration. In this case, if the HARQ-ACK feedback information is ACK, the transmitting end determines a contention duration value for channel occupancy to be a minimum value. If the HARQ-ACK feedback information is NACK, the transmitting end adds 1 to the previously used contention duration value.

According to the invention, when a plurality of pieces of HARQ-ACK feedback information are present for the PSSCH transmitted and received in the reference duration, if more than X% (e.g., X=10) of HARQ-ACK information is ACK among the plurality of pieces of HARQ-ACK feedback information, the transmitting end determines this to be ACK, and if less than X% of HARQ-ACK information is NACK, the UE determines this to be NACK. Subsequent operations are the same as those in the provided embodiment. In an embodiment, when a plurality of pieces of HARQ-ACK feedback information are present for the PSSCH, the PSSCH may be groupcast-based SL communication or when transmission included in the PSSCH is data transmission based on not TB but CBG, the plurality of pieces of HARQ-ACK feedback information may be produced.

In one embodiment, i the contention duration size is further adjusted by dividing the duration variously such as X1%, X2%, X3%, or the like, instead of X%. For example, assuming that X1=10, X2=5, and X3=1, if an ACK ratio of the plurality of pieces of HARQ-ACK information received by the transmitting end is more than 10%, the UE determines the contention duration size to be minimum value. Alternatively, if the ACK ratio of the plurality of pieces of HARQ-ACK information received by the transmitting end is greater than or equal to 5% and less than 10%, the UE determines the contention duration size by adding 1 to the previously used contention duration value.

Alternatively, if the ACK ratio of the plurality of pieces of HARQ-ACK information received by the transmitting end is greater than or equal to 1% and less than 5%, the UE determines the contention duration size by adding 2 to the previously used contention duration value. Alternatively, if the ACK ratio of the plurality of pieces of HARQ-ACK information received by the transmitting end is less than 1%, the UE determines the contention duration size by adding 3 to the previously used contention duration value. This is only an example, and it is sufficiently possible to apply another value, and it is also possible to add a negative value to the contention duration. In addition, this method may adjust the contention duration size by using a value other than 1 according to a level of an ACK or NACK ratio for the plurality of pieces of HARQ-ACK information.

In one embodiment, a second transmission type of HARQ-ACK feedback information is provided.

In case of the second transmission type of HARQ-ACK feedback information, a receiving end may report a feedback of corresponding NACK information to a transmitting end with respect to a PSSCH received from the transmitting end. Therefore, unlike in the provided embodiment, the transmitting end is not able to adjust a contention duration size by utilizing ACK information. That is, from a perspective of the transmitting end, when HARQ-ACK information is not received (DTX, No detection), it is difficult to identify whether the receiving end has successfully received a PSCCH and does not transmit an HARQ-ACK feedback since it is in an ACK state or whether the HARQ-ACK feedback has not been transmitted upon failing in receiving of a PSCCH for scheduling the PSSCH. Therefore, the transmitting end may adjust a contention duration for channel access by considering at least one of the following embodiments. It is assumed that a reference duration is defined as the same reference duration as in the embodiment 1-1.

In one embodiment, the transmitting end receives HARQ-ACK feedback information for a PSSCH which has been transmitted in the reference duration, and if a corresponding result is DTX (no reception), that is, in case of No HARQ detection, the transmitting end may select a contention duration size value for channel access to be a minimum value or add -1 to the contention duration size value. Otherwise, if the HARQ-ACK feedback information is NACK, the transmitting end adds +1 to the contention duration size value for channel access. The value -1 or +1 is only an example, and a value other than that may also be selected.

In one embodiment, since the transmitting end is able to receive only NACK information in practice, it may not be possible to adaptively adjust the contention duration size. Therefore, the transmitting end may determine the contention duration size to be a specific value, instead of increasing or decreasing the contention duration size by +1 or -1 according to an HARQ-ACK feedback information result for a PSSCH which has been transmitted in the reference duration. For example, if the HARQ-ACK feedback information result is NACK, the contention duration size (i.e., CWS) is determined to be CWS1, and if the HARQ-ACK feedback information result is DTX, the contention duration size (i.e., CWS) is determined to be CWS2. Although the CWS1 and the CWS2 are characterized in that the CWS1 is greater in size than the CWS2 in general, the other way around is also possible.

In addition, the CWS 1 and the CWS2 may be preconfigured to be values fixed in the standard or may be determined to be different values according to a priority of SL data to be transmitted by the transmitting end or may be preconfigured by a higher signal or may be configured to be different values according to location information of the transmitting end or a transmit power level or a cast type of data to be transmitted.

In an embodiment, a third transmission type of HARQ-ACK feedback information is provided.

In case of the third transmission type of HARQ-ACK feedback information, since the receiving end does not deliver the HARQ-ACK feedback information to the transmitting end, from a perspective of the transmitting end, it is not possible to utilize feedback information for adjusting a contention duration size for channel access. In this situation, the transmitting end may adjust the contention duration size for channel access by considering at least one of the following methods. It is assumed that the reference duration is the same as in the embodiments provided in the present disclosure. However, the reference duration is not limited to these embodiments, and may be determined variously. For example, it may be determined based on control information transmitted immediately before by the transmitting end.

In one embodiment, a method of determining ACK or NACK implicitly according to NDI information included in SL control information is provided. A case where NDI is toggled is determined as ACK, and a case where the NDI is not toggled is determined as NACK. In this case, a timing at which the UE determines NDI information is when control information is transmitted immediately before occupying a channel to transmit data, and the contention duration size for channel access is determined based on this. Therefore, when the transmitting end intends to transmit data through channel access in a format in which the NDI is toggled, the transmitting end may regard this as ACK, and the channel access may be performed by using the contention duration size determined to be a minimum value or a value obtained by adding -1 to the contention duration size applied immediately before.

In addition, when the NDI is not toggled through channel access, the transmitting end regards this as NACK, and the channel access may be performed by using the contention duration size determined to be a value obtained by adding +1 to the contention duration size applied immediately before. Accordingly, main information for adjusting the contention duration in the embodiment provided in the present disclosure may be determined based on the NDI included in control information for scheduling data information intended to be transmitted by the transmitting end to the receiving end. In addition, it may be sufficiently possible to determine the contention duration size through control information other than the NDI. For example, the contention duration size may be adjusted based on an HARQ process number, a TBS size, time resource allocation information, or the like. In addition, a size value for adjusting a contention duration, a minimum value, and a minimum value may have different values according to priority information of data intended to be transmitted by the transmitting end, a cast type, a TBS size, a location of the transmitting end, higher signal configuration information, or the like.

In one embodiment, the transmitting end may determine the contention duration size to be a minimum value if data to be transmitted through channel occupancy is data to be transmitted first, and may perform channel access by applying a value obtained by adding +1 to an immediately previous contention duration size if the data is data to be retransmitted. Alternatively, regardless of this, the contention duration value has always a fixed size, and another contention duration value may be configured according to priority information or cast type of data transmitted by the transmitting end, a TBS size, a location of the transmitting end, a higher signal configuration, or the like.

In the aforementioned various embodiments and methods, a threshold for adjusting a contention duration and a range of adjusting the contention duration may apply the same or different value according to whether HARQ-ACK feedback information is HARQ-ACK feedback information for unicast-based data or whether HARQ-ACK feedback information for groupcast-based data. In addition, a contention duration size in use may also apply a different value when a channel is occupied in advance according to a cast type to be transmitted by the UE. In an embodiment, the transmitting end may apply a different value to a contention duration value (CWS_unicast) used for channel access when unicast data is transmitted and a contention duration value (CWS_groupcast) used for channel access when groupcast data is transmitted.

For example, when the transmitting end intends to transmit unicast data through channel access, a value CWS_unicast may be adjusted according to a value CWS_unicast applied immediately before and HARQ-ACK information received by the transmitting end in the reference duration. In addition, when the transmitting end intends to transmit groupcast data through channel access, a value CWS_groupcast may be adjusted according to a value CWS_groupcast applied immediately before and HARQ-ACK information received by the transmitting end in the reference duration. Therefore, the UE may use a value for adjusting the contention duration differently according to a cast type associated with corresponding data information.

Alternatively, although the same contention duration value is used always regardless of this, a range of adjusting the contention duration value may be applied differently. For example, the transmitting end may use the same value CWS = CWS_groupcast = CWS_unicast regardless of whether data to be transmitted through channel access is unicast or broadcast. However, in this case, a threshold (e.g., a value X, X1, X2, etc.) for adjusting the CWS and a range of adjusting the CWS (i.e., an increment/decrement of the CWS) may vary depending on respective cast types. Alternatively, the same contention duration value may be applied regardless of this, and a range of adjusting the contention duration value may also be equally applied.

In the aforementioned embodiment and methods, if the previously used contention duration value is a maximum value, the maximum value may be equally applied. Alternatively, when the transmitting end has attempted channel occupancy continuously N times (e.g., N=3) with a contention duration value having a maximum value or has attempted and occupied a channel, the transmitting end may determine the contention duration value to be a minimum value regardless of ACK or NACK information.

Although a method of determining a contention duration size by considering various HARQ-ACK feedback transmission types has been described up to now, in addition thereto, the transmitting end may determine the contention duration size always with a fixed value regardless of the HARQ-ACK feedback transmission type. In this case, the fixed value may vary depending on a cast type. In addition, the fixed value may vary depending on a priority of transmission performed by the UE. In addition, the fixed value may vary depending on the HARQ-ACK feedback transmission type.

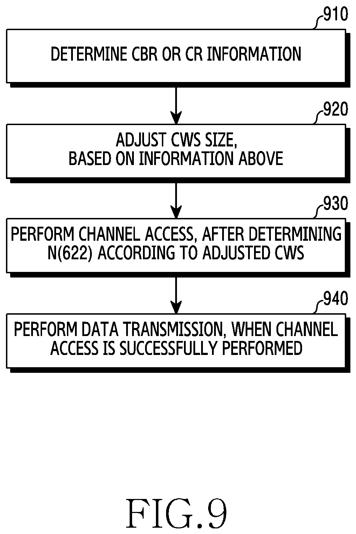

FIG. 9 illustrates a flowchart of a method for adjusting a CWS for SL-based channel access in an unlicensed band of a UE according to a second embodiment of the disclosure.

Basically, it is not predictable in SL communication which communication system and when and at any time a resource will be occupied and used. Therefore, in general, all communication devices operating in SL always perform an operation of receiving data information in a preconfigured resource region at a timing at which transmission is not performed. Some SL communication devices for power saving may be present even if reception is cyclically performed only for a certain period of time or reception itself is not performed. Embodiments of adjusting a size of a contention duration for channel access through an SL channel occupancy ratio (CR) or channel busy ratio (CBR) value will be described by considering a characteristic of a transmitting end performing the aforementioned embodiment.

The CR implies a ratio of resources used for SL communication among all resources for a specific duration. For example, if the CR is 50%, it means that 50% resources are used for SL communication in the specific duration. This is expressed with a relational formula of CR = (A+B)/C, when A denotes the number of resources (e.g., sub-channels) used for SL communication between [n-a, n-1] based on a slot n, B denotes the number of resources used for SL communication between [n, n+b], and C denotes the number of all resources configured between [n-a, n+b]. When it is said that the resource is used or determined to be used for SL communication, it means that a corresponding transmitting end obtains control information through PSCCH reception to determine a resource region used by another communication device in practice. Since the slot n is any slot, a CR value may change for each slot.

In addition, values a and b may be 0 or positive integer values. In addition, the values a and b may vary depending on a subcarrier spacing. The SL CR may be determined at a timing (e.g., the slot n) at which the transmitting end intends to transmit data. In addition, a slot index considered in the SL CR may be a slot index of a logical channel or a slot index of a physical channel, and the CR value may vary depending on priority information. For example, when the priority information is classified into 3 types, the CR may be determined by considering only each period of priority information. That is, when calculating the number of resources used in A and B, only the number of resources corresponding to a specific priority may be calculated, and when it is assumed that priorities 1, 2, and 3 are high in that order, it may be calculated such that a CR for the priority 1 is 10%, a CR for the priority 2 is 20%, and a CR for the priority 3 is 30%.

Alternatively, when the priority information is low, the CR may be calculated by implicitly considering high priority information. Considering the aforementioned examples (i.e., it is calculated such that the CR for the priority 1 is 10%, the CR for the priority 2 is 20%, and the CR for the priority 3 is 30%), it may be considered such that the CR of the priority 1 is 10%, the CR for the priority 2 is (10+20)% by considering the priority 1 together, and the CR for the priority 3 is (10+20+30)% by considering the priorities 1 and 2 together.

Meanwhile, the CBR implies a ratio of resources of which received signal strength (e.g., a received signal strength index (RSSI)) measured in each of resources by the transmitting end in the reference duration exceeds a reference threshold. This is expressed with a relational formula of CBR=A/B, when A denotes the number of resources of which received signal strength measured by the transmitting end for a duration [n-a, n-1] in a reference slot n exceeds a specific threshold α, and B nodes the total number of resources in the duration [n-a, n-1]. Herein, the value α has a positive integer value, and may have a different value depending on a subcarrier spacing. In this case, a slot index may be based on a physical channel or may be based on a logical channel. Although the CBR is described by taking the RSSI for example, it may also be determined based on reference signal received power (RSRP), reference signal received quality (RSRQ), or the like.

Therefore, a difference between the CR and the CBR may vary depending on which information is measured by the transmitting end. The CR is determined based on information identified by demodulating/decoding control information transmitted/received through the PSCCH, and the CBR is determined based on strength of a signal received through a specific resource region. A method of configuring a contention duration for channel access is described hereinafter by considering at least one of the CR and the CBR.

In one embodiment, the transmitting end determines a contention duration size value according to which duration a range of a corresponding value belongs after determining a CBR and/or CR value. Table 2 and Table 3 illustrate an example of a contention duration size (i.e., CWS) value according to the CBR and CR values. In general, when the CBR or CR value is great, there is a high possibility that a channel state is busy. Therefore, it may be necessary to increase the CWS value to decrease contention-based channel access in an unlicensed band. When the CBR measured in a slot n has a value of 50% in a situation where a contention duration size value is determined based on the CRB, the transmitting end determines the CWS value (i.e., CWS_CBR) to be 5 according to Table 2.

Alternatively, when the CR measured in the slot n has a value of 30% in a situation where the contention duration size value is determined based on the CR, the transmitting end determines the CWS value (i.e., CWS_CR) to be 4. Which one is considered between the CBR and the CR when the transmitting end determines the CWS may be defined in the 3GPP standard or may be configured by using a higher signal or may be determined implicitly according to priority information or cast type information of data to be transmitted by the transmitting end or an HARQ-ACK feedback information type.

Alternatively, there may be UEs which determine the CWS by considering only the CR according to UE capability, or there may be UEs which determine the CWS by considering only the CBR, or there may be UEs which determine the CWS by considering both the CBR/CR. In addition, these UEs may be present together. Meanwhile, when the transmitting end considers both the CBR and CR values, the CWS value determined based on the CBR and CR values may be different. For example, when it is determined that CWS_CBR = 5 and CWS_CR = 4 according to Table 2 and Table 3 below in a situation where the CBR is 50% and the CR is 35%, the transmitting end may determine one CWS by considering at least one formula among min(CWS_CBR, CWS_CR), max(CWS_CBR, CWS_CR), and round(avg(CWS_CBR, CWS_CR)).

A method of selecting such a formula may be defined in the 3GPP standard or may be configured by using a higher signal or may be determined implicitly according to priority information or cast type information of data to be transmitted by the transmitting end or an HARQ-ACK feedback information type.

**Table 2**

| **CBR** | ~ 20% | 20% ~ 40% | 40% ~ 60% | 60% ~ |
|---|---|---|---|---|
| **CWS_CBR** | 3 | 4 | 5 | 6 |

**Table 3**

| **CR** | ~ 20% | 20% ~ 40% | 40% ~ 60% | 60% ~ |
|---|---|---|---|---|
| **CWS_CR** | 3 | 4 | 5 | 6 |

Table 2 and Table 3 are only an example of a contention duration size (i.e., CWS) value depending on CBR and CR values, and the disclosure is not limited thereto. Thus, the number of durations for determining the CWS, a level of a threshold, and the CWS value may be applied variously. In addition, another value or another table may be provided according to a priority and cast type of SL data to be transmitted by the transmitting end.

In one embodiment, t an embodiment provided in the present disclosure is provided in which the CWS is determined based on one value obtained by measuring the CBR or CR value, and an embodiment provided in the present disclosure is provided in which the CWS is determined by comparing CBR or CR values which have been measured for each specific period. For example, a UE may compare a CBR (i.e., CBR_n) measured in a slot n and a CBR (CBR_n-k) measured in a slot n-k. If CBR_n - CBR_n-k > 0, it means that a channel occupancy state level of a corresponding SL channel has increased. Therefore, the CWS may be increased by a specific value x, compared to a CWS used immediately before. Otherwise, if CBR_n - CBR_n-k < 0, it means that the channel occupancy state level of the SL channel has decreased. Therefore, the CWS may be decreased by a specific value y, compared to the CWS used immediately before.

Alternatively, the CWS may be determined to be a minimum value. In an embodiment, a value other than 0 may be applied in the formula of determining a difference between the CBR_n and the CBR_n-k. In addition, a value k may be, for example, a value of 10 or may be a value other than 10. Numbers and values presented in the aforementioned example may be defined in the 3GPP standard or configured as higher signals or determined according to priority information, cast type information, or HARQ-ACK feedback information types of data to be transmitted implicitly by the transmitting end.

In addition, although it has been described in the aforementioned embodiment that the CBR_n is defined as a CBR value measured in the slot n, this is only one example, and it is also possible to consider an average value of CBRs measured in a plurality of slots. The plurality of slots may be, for example, an average of CBRs measured in previous 4 slots including the slot n or an average of CBRs measured in (n-10)-th and (n-20)-th slots including the slot n. Although the CBR has been mainly described in the aforementioned embodiment, the CBR may be applied by being replaced with the CR.

FIG. 9 illustrates a process in which a UE determines a contention duration value by considering the aforementioned CR or CBR information. In the presence of UE capability information, in step 910, a transmitting end may determine to consider at least one of a CBR and a CR. In step 920, the transmitting end determines a contention duration value, based on measured CBR or CR information. In addition, the transmitting end randomly selects the value N 622 in step 930 according to the determined contention duration value and then performs channel access in step 940. If the transmitting end determines an idle mode for N sensing slots as a result of channel sensing, the transmitting end may transmit control and data information through SL.

The aforementioned second embodiment may be applied limitedly to a case where the transmitting end performing SL communication is not able to use HARQ-ACK information. That is, the first embodiment may be applied when the HARQ-ACK information is usable, and the second embodiment may be applied when the HARQ-ACK information is not usable. In case of the second HARQ-ACK feedback transmission type, the first embodiment may be applied or the second embodiment may be applied.

In addition that the aforementioned embodiments are applied limitedly to the described situation, it is sufficiently possible to consider that the embodiments are applicable to other situations. Further, it is also sufficiently possible to utilize combinations of the embodiments when a communication device adjusts a contention duration for channel access.

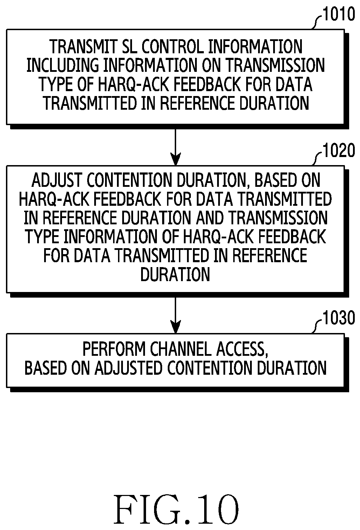

FIG. 10 illustrates a flowchart of a channel access method of a UE transmitting SL information in an unlicensed band according to an embodiment of the disclosure.

Referring to FIG. 10, first, in step 1010, the UE transmits SL control information including information on a transmission type of HARQ-ACK feedback for data transmitted in a reference duration. Herein, the SL control information may further include cast type information for data transmitted in the reference duration.

In an embodiment, the transmission type of HARQ-ACK feedback may be classified into three types. A first HARQ-ACK feedback transmission type is a type in which ACK or NACK information is transmitted as the HARQ-ACK feedback. A second HARQ-ACK feedback transmission type is a type in which only NACK information is transmitted as the HARQ-ACK feedback. A third HARQ-ACK feedback transmission type is a type in which the HARQ-ACK feedback is not transmitted. The SL control information may include information indicating which transmission type is the transmission type of the HARQ-ACK feedback for the data transmitted in the reference duration.

In an embodiment, SL communication in the unlicensed band may be performed in three types, i.e., unicast, groupcast, and broadcast. The SL control information may include information indicating with which type the data transmitted in the reference duration is cast. Further, the SL control information may indicate the transmission type information of HARQ-ACK feedback together with cast type information. In an embodiment, the UE may determine a contention duration size, a range of adjusting the contention duration size, or the like differently according to the cast type.

In an embodiment, the reference duration in which the data is transmitted may include at least one of a first slot in a duration in which a channel is occupied immediately before the UE occupies the channel, a first slot after all resources of a physical sidelink control channel (PSCCH)/physical sidelink shared channel (PSSCH) are completely transmitted and received, a first slot in which all scheduled resources of the PSCCH/PSCCH are completely transmitted and received, a duration from a channel occupancy start timing to a last symbol timing of a first PSCCH/PSSCH, and a slot in which the first PSCCH/PSSCH requiring an HARQ-ACK feedback of which a transmission type is the first transmission type of HARQ-ACK feedback, in which any one of ACK and NACK is transmitted. Further, the reference duration may be determined by considering SL synchronization or control or data signals and HARQ-ACK feedback type or transmit power of the UE or a frequency or time resource region or the like in which SL transmission/reception is performed.

In an embodiment, a Tx UE may receive the SL control information through a physical sidelink shared channel (PSSCH), and an Rx UE may receive the SL control information by monitoring the PSSCH. Herein, the SL control information may include sidelink control information (SCI).

In step 1020, the UE adjusts the contention duration, based on an HARQ-ACK feedback for data transmitted in a reference duration and transmission type information of the HARQ-ACK feedback for the data transmitted in the reference duration. Herein, the UE may adjust the contention duration, based on cast type information for the data transmitted in the reference duration. That is, the UE may adjust the contention duration, based on the cast type information and the transmission type information of the HARQ-ACK feedback for the data transmitted in the reference duration.

In an embodiment, the transmission type information of HARQ-ACK feedback may indicate a first transmission type of HARQ-ACK feedback, in which any one of ACK and NACK is transmitted. In this case, the UE may determine a contention duration size to be a minimum value if the ACK is received as the HARQ-ACK feedback, and may determine the contention duration size to be greater than a previous contention duration size if the NACK is received. In this case, if the NACK is received, the UE may determine the contention duration size by adding a set value to the previous contention duration size. For example, the UE may determine the contention duration size by adding the set value, i.e., "1," to the previous contention duration size.

In addition, when a plurality of HARQ-ACK feedbacks are received, the UE may determine that ACK is received if an ACK ratio is greater than a threshold, and may determine that NACK is received if the ACK ratio is less than the threshold. If the ACK ratio is equal to the threshold, it may be determined that the ACK is received or the NACK is received according to a configuration.

Further, when the plurality of HARQ-ACK feedbacks are received, the UE may determine a range of adjusting the contention duration size according to the ACK ratio. In an embodiment, the lower the ACK ratio, the greater the range of adjusting the contention duration size may be. For example, the ACK ratio may be classified into a duration in which the ACK ratio is less than 1%, a duration in which the ACK ratio is in the range of 1 to 5%, a duration in which the ACK ratio is in the range of 5 to 10%, and a duration in which the ACK ratio is greater than 10%. The contention duration size may be determined by adding 1 to a previous contention duration in the duration in which the ACK ratio is in the range of 5 to 10%. The contention duration size may be determined by adding 2 to the previous contention duration size in the duration in which the ACK ratio is in the range of 1 to 5%. The contention duration size may be determined by adding 3 to the previous contention duration size in the duration in which the ACK ratio is less than 1%.

Although the process of determining the contention duration size according to the ACK ratio has been described up to now, the disclosure is not limited thereto, and the contention duration size may be determined according to the NACK ratio. For example, the UE may determine that NACK is received if the NACK ratio is greater than the threshold, and may determine that ACK is received if the NACK ratio is less than the threshold. In addition, the range of adjusting the contention duration size may be determined according to the NACK ratio.

In an embodiment, the transmission type information of HARQ-ACK feedback may indicate a second transmission type of HARQ-ACK feedback, in which only the NACK is transmitted. In this case, the UE may determine the contention duration size to be a minimum value or determine the contention duration size to be less than a previous contention duration size if the HARQ-ACK feedback is not received, and may determine the contention duration size to be greater than the previous contention duration size if the NACK is received as the HARQ-ACK feedback. In this case, if the NACK is received, the UE may determine the contention duration size by adding a set value to the previous contention duration size. For example, the UE may determine the contention duration size by adding the set value, i.e., "1," to the previous contention duration size.

In addition, the UE may determine the contention duration size to be a first setup value if the HARQ-ACK feedback is not received, and may determine the contention duration size to be a second setup value if the NACK is received as the HARQ-ACK feedback. In this case, the first setup value and the second setup value may be preconfigured to be a value fixed in a standard or may be determined to be a different value depending on a priority of SL data to be transmitted by the Tx UE. In addition, it may be preconfigured by a higher signal or may be configured to be a different value depending on location information of the Tx UE, a transmit power size, or a cast type of data to be transmitted.

In an embodiment, the transmission type information of HARQ-ACK feedback may indicate a third transmission type of HARQ-ACK feedback, in which the HARQ-ACK feedback is not transmitted. In this case, the UE may determine that the ACK is received if a new data indicator (NDI) included in the sidelink control information is toggled, and may determine that the NACK is received if not toggled. Further, the UE may determine control information other than the NDI, for example, an HARQ process number, a TBS size, time resource allocation information, or the like.

In addition, the UE may determine the contention duration size, based on at least one of a preconfigured criterion, a fixed contention duration value, and information included in the sidelink control information.

In step 1030, the UE performs channel access, based on the adjusted contention duration.

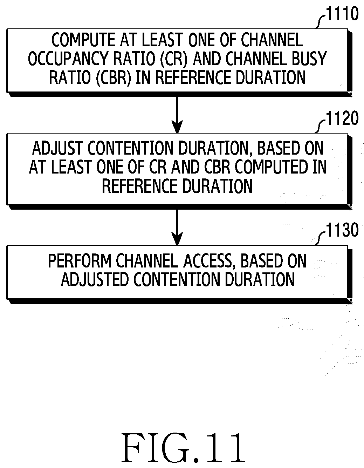

FIG. 11 illustrates a flowchart of a channel access method of a UE transmitting SL information in an unlicensed band according to another embodiment of the disclosure.

Referring to FIG. 11, first, in step 1110, the UE computes at least one of a channel occupancy ratio (CR) and a channel busy ratio (CBR) in a reference duration. Herein, the CR implies a ratio of a resource used for SL communication among total transmission resources during a specific duration. In addition, the CBR implies a ratio of resources of which received signal strength (e.g., received signal strength index (RSSI)) measured in respective resources by a Tx UE within the reference duration exceeds a reference threshold. That is, in this method, the CR is determined based on information identified by demodulating/decoding control information transmitted and received through a PSCH, and the CBR is determined based on received signal strength of a signal received through a specific resource region.

In an embodiment, the UE may compute a plurality of CRs and/or CBRs in a plurality of reference durations. For example, the UE may compute the CR and/or the CBR for each specific period.

In step 1120, the UE adjusts a contention duration, based on at least one of the CR and the CBR, which are computed in the reference duration. In an embodiment, the UE may determine the contention duration size to be a value corresponding to at least one of the computed CR and CBR. For example, the UE may store the contention duration size corresponding to each of the CR and/or the CBR in a form of a table. The UE may determine the contention duration size corresponding to the CR and/or CBR computed according to such a table.

In an embodiment, in the presence of the plurality of CRs and/or CBRs, the UE may adjust the contention duration, based on a difference between at least one value of the CR and CBR computed in a previous reference duration and at least one value of the CR and CBR computed in a current reference duration. In addition, the UE may adjust the contention duration, based on an average of at least one of the plurality of CRs and CBRs computed in the plurality of reference durations.

In step 1130, the UE performs channel access, based on the adjusted contention duration.

In an embodiment, the UE may adjust the contention duration by using at least one of the CR and the CBR, based on UE capability information. That is, the UE may adjust the contention duration by using a computable value.

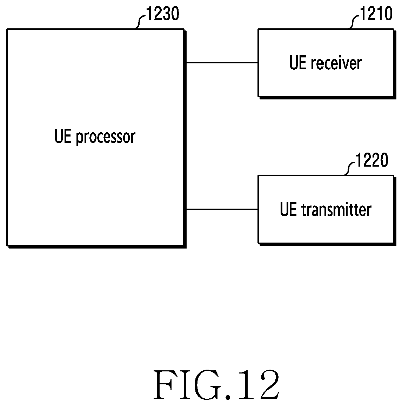

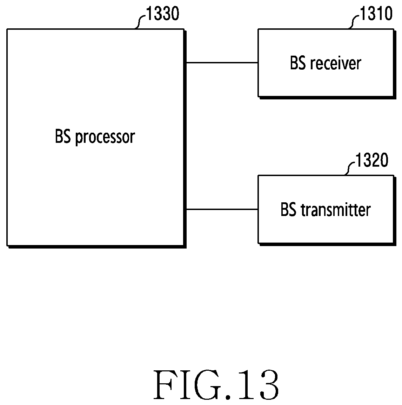

In a diagram illustrating a structure of a UE and BS, which is described below with reference to FIG. 12 and FIG. 13, the BS may be regarded as a communication device which transmits an SL signal in an SL environment.

FIG. 12 illustrates a structure of a UE according to an embodiment of the disclosure.

Referring to FIG. 12, the UE may include a UE receiver 1210, a UE transmitter 1220, and a UE processor (controller) 1230.

The UE receiver 1210 and the UE transmitter 1220 may be collectively referred to as a transceiver. The UE receiver 1210, UE transmitter 1220, and UE processor 1230 of the UE may operate according to the aforementioned communication method of the UE. However, components of the UE are not limited to the aforementioned example. For example, the UE may include more components (e.g., a memory, etc.) or less components than the aforementioned components. In addition thereto, the UE receiver 1210, the UE transmitter 1220, and the UE processor 1230 may be implemented as a single chip. The UE of FIG. 12 may correspond to the UE-1 and UE-2 of FIG. 1A.

The UE receiver 1210 and the UE transmitter 1220 (or transceiver) may transmit and receive a signal with respect to a BS. Herein, the signal may include control information and data. To this end, the transceiver may include an RF transmitter which up-converts and amplifies a frequency of a signal to be transmitted, an RF receiver which amplifies the received signal with low noise and down-converts the signal, or the like. However, this is only an embodiment of the transceiver, and components of the transceiver are not limited to the RF transmitter and the RF receiver.

In addition, the transceiver may receive a signal through a radio channel and transmit the signal to the UE processor 1230, and may transmit the signal output from the UE processor 1230 through the radio channel.

A memory (not shown) may store programs and data required for the operation of the UE. In addition, the memory may store control information or data included in a signal obtained from the UE. The memory may be constructed of storage media such a read only memory (ROM), a random access memory (RAM), a hard disk, a compact disc-ROM (CD-ROM), a digital versatile disc (DVD), or the like, or combinations of the storage media.

The UE processor 1230 may control a series of processes so that the UE operates according to the aforementioned embodiment of the disclosure. The UE processor 1230 may be implemented with a circuit or an application-specific integrated circuit or at least one processor. The UE processor 1230 may be implemented with a controller or at least one processor.

FIG. 13 illustrates a structure of a BS according to an embodiment of the disclosure.

Referring to FIG. 13, the BS may include a BS receiver 1310, a BS transmitter 1320, and a BS processor (controller) 1330.

The BS receiver 1310 and the BS transmitter 1320 may be collectively referred to as a transceiver. The BS receiver 1310, BS transmitter 1320, and BS processor 1330 of the BS may operate according to the aforementioned communication method of the BS. However, components of the BS are not limited to the aforementioned example. For example, the BS may include more components (e.g., a memory, etc.) or less components than the aforementioned components. In addition thereto, the BS receiver 1310, the BS transmitter 1320, and the BS processor 1330 may be implemented as a single chip. The BS of FIG. 13 may correspond to the BS(e.g., gNB, eNB, RSU) of FIG. 1A.

The BS receiver 1310 and the BS transmitter 1320 (or transceiver) may transmit and receive a signal with respect to a UE. Herein, the signal may include control information and data. To this end, the transceiver may include an RF transmitter which up-converts and amplifies a frequency of a signal to be transmitted, an RF receiver which amplifies the received signal with low noise and down-converts the signal, or the like. However, this is only an embodiment of the transceiver, and components of the transceiver are not limited to the RF transmitter and the RF receiver.

In addition, the transceiver may receive a signal through a radio channel and transmit the signal to the BS processor 1330, and may transmit the signal output from the BS processor 1330 through the radio channel.

A memory (not shown) may store programs and data required for the operation of the BS. In addition, the memory may store control information or data included in a signal obtained from the BS. The memory may be constructed of storage media such a ROM, a RAM, a hard disk, a CD-ROM, a DVD, or the like, or combinations of the storage media.

The BS processor 1330 may control a series of processes so that the BS operates according to the aforementioned embodiment of the disclosure. The BS processor 1330 may be implemented with a controller or at least one processor.

According to an embodiment, a method performed by a user equipment (UE) transmitting sidelink information in an unlicensed band is provided. The method comprises transmitting sidelink control information including at least one piece of a transmission type information of a hybrid automatic repeat request (HARQ)-acknowledgement (ACK) feedback for data transmitted in a reference duration, adjusting a contention duration, based on the HARQ-ACK feedback for the data transmitted in the reference duration and the transmission type information of the HARQ-ACK feedback for the data transmitted in the reference duration and performing a channel access based on the adjusted contention duration.

The control information further comprises cast type information for the data transmitted in the reference duration, and the contention duration is adjusted based on the cast type information.

When the transmission type information of the HARQ-ACK feedback indicates a first transmission type of the HARQ-ACK feedback, in which an ACK or an NACK is transmitted, adjusting the contention duration comprises determining a contention duration size as a minimum value in case that the ACK is received as the HARQ-ACK feedback, and determining the contention duration size as a value greater than a previous contention duration size in case that the NACK is received.

When a plurality of HARQ-ACK feedbacks are received, adjusting the contention duration comprises determining that the ACK is received in case that an ACK ratio is greater than or equal to a threshold, and determining that the NACK is received in case that the ACK ratio is less than the threshold.

Adjusting the contention duration comprises determining a range of the contention duration size according to the ACK ratio in case that a plurality of HARQ-ACK feedbacks is received.

When the transmission type information of HARQ-ACK feedback indicates a second transmission type of HARQ-ACK feedback in which a NACK is transmitted, adjusting the contention duration comprises determining the contention duration size as a minimum value or determining the contention duration size as a value less than a previous contention duration size in case that the HARQ-ACK feedback is not received, and determining the contention duration size as a value greater than the previous contention duration size in case that the NACK is received as the HARQ-ACK feedback.

When the transmission type information of the HARQ-ACK feedback indicates a second transmission type of the HARQ-ACK feedback, in which the NACK is transmitted, adjusting the contention duration comprises determining the contention duration size as a first setup value in case that the HARQ-ACK feedback is not received, and determining the contention duration size as a second setup value in case that the NACK is received as the HARQ-ACK feedback.

When the transmission type information of the HARQ-ACK feedback indicates a third transmission type of the HARQ-ACK feedback, in which the HARQ-ACK feedback is not transmitted, adjusting the contention duration comprises determining that the ACK is received in case that a new data indicator (NDI) included in the sidelink control information is toggled, and determining that the NACK is received in case that the NDI is not toggled.

When the transmission type information of the HARQ-ACK feedback indicates a third transmission type of the HARQ-ACK feedback, in which the HARQ-ACK feedback is not transmitted, adjusting the contention duration comprises determining the contention duration size based on at least one of a preconfigured criterion, a fixed contention duration value, or information included in the sidelink control information.

The reference duration comprises at least one of a first slot in a duration in which a channel is occupied before the UE occupies the channel, a first slot after all resources of a physical sidelink control channel (PSCCH)/physical sidelink shared channel (PSSCH) are transmitted and received, a first slot in which all scheduled resources of the PSCCH/PSCCH are transmitted and received, a duration from a channel occupancy start timing to a last symbol timing of a first PSCCH/PSSCH, or a slot in which the first PSCCH/PSSCH requiring an HARQ-ACK feedback of which a transmission type is the first transmission type of HARQ-ACK feedback, in the ACK or a NACK is transmitted.

According to an embodiment, a method performed by a user equipment (UE) transmitting sidelink information in an unlicensed band is provided. The method comprises calculating at least one of a channel occupancy ratio (CR) or a channel busy ratio (CBR) in a reference duration, adjusting a contention duration based on at least one of the calculated CR or CBR and performing a channel access based on the adjusted contention duration.

Adjusting the contention duration comprises determining a contention duration size as a value corresponding to at least one of the calculated CR or CBR.

Calculating the at least one of the CR or the CBR in the reference duration comprises calculating at least one of a plurality of CRs or a plurality of CBRs in a plurality of reference durations. The contention duration is adjusted based on at least one of the plurality of CRs or CBRs calculated in the plurality of reference durations.

The contention duration is adjusted based on a difference between at least one value of the CR or at least one value of the CBR calculated in a previous reference duration and at least one value of the CR or the at least one value of the CBR calculated in the reference duration.

The contention duration is adjusted based on an average of at least one of the plurality of CRs or the plurality of CBRs calculated in the plurality of reference durations.

According to an embodiment, a user equipment (UE) transmitting sidelink information in an unlicensed band. The UE comprises a transceiver and a controller operably connected to the transceiver. The controller is configured to transmit sidelink control information including at least one piece of a transmission type information of a hybrid automatic repeat request (HARQ)-acknowledgement (ACK) feedback for data transmitted in a reference duration, adjust a contention duration, based on the HARQ-ACK feedback for the data transmitted in the reference duration and the transmission type information of the HARQ-ACK feedback for the data transmitted in the reference duration, and perform a channel access based on the adjusted contention duration.

According to an embodiment user equipment (UE) transmitting sidelink information in an unlicensed band. The UE comprises a transceiver and a controller operably connected to the transceiver. The controller is configured to calculate at least one of a channel occupancy ratio (CR) or a channel busy ratio.

Methods based on the embodiments disclosed in the claims and/or specification of the disclosure may be implemented in hardware, software, or a combination of both.

When implemented in software, computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

The program (i.e., the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may have access to a device for performing an embodiment of the disclosure via an external port. In addition, an additional storage device on a communication network may have access to the device for performing the embodiment of the disclosure.

Meanwhile, the order of description in the drawings describing the method of the disclosure does not necessarily correspond to the order of execution, and the execution may be performed in a reverse order or in parallel.

Alternatively, in the drawings describing the method of the disclosure, some components may be omitted and only some components may be included within the scope not departing from the spirit of the disclosure.

In addition, the method of the disclosure may be executed by combining some or all of descriptions included in respective embodiments within the scope not departing from the spirit of the disclosure.

In addition, although not disclosed in the disclosure, a method in which an additional table or information including at least one component included in the table provided in the disclosure is used is also possible.

Meanwhile, embodiments of the disclosure disclosed in the specification and drawings are presented only as a specific example for clarity and are not intended to limit the scope of the disclosure. That is, it is apparent to those ordinarily skilled in the art to which the disclosure pertains that other modifications based on the technical idea of the disclosure are possible. In addition, each of the embodiments may be operated optionally in combination with each other.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a first user equipment, UE, in a wireless communication system, the method comprising:
transmitting, to a second UE among UEs in a groupcast sidelink, SL, transmission, a physical sidelink shared channel, PSSCH, in a reference duration;
receiving, from the second UE, a hybrid automatic repeat request acknowledgement/negative acknowledgement, HARQ-ACK/NACK, feedback corresponding to the PSSCH for the groupcast SL transmission;
identifying whether a ratio of a number of ACK in HARQ-ACK/NACK feedbacks from the UEs is equal to or larger than a threshold, wherein the HARQ-ACK/NACK feedbacks include the HARQ-ACK/NACK feedback from the second UE;
in case that the ratio is equal to or larger than the threshold, setting a value of a contention window to a minimum value; and
in case that the ratio is less than the threshold, increasing the value to a next higher value.

2. The method of claim 1, wherein the reference duration includes a duration starting from a beginning of a channel occupancy for the PSSCH until an end of a first slot in which the PSSCH is transmitted.

3. The method of claim 1, further comprising:
transmitting a PSSCH for a unicast SL transmission based on a channel sensing; and
identifying a value of a second contention window for an SL transmission based on whether a HARQ-ACK/NACK feedback corresponding to the PSSCH for the unicast SL transmission includes an ACK.

4. The method of claim 3, wherein the identifying of the value of the second contention window based on whether the HARQ-ACK/NACK feedback includes the ACK further comprises:
in case that the HARQ-ACK/NACK feedback corresponding to the PSSCH for the unicast SL transmission includes the ACK, setting the value of the second contention window to a minimum value; and
in case that the HARQ-ACK/NACK feedback corresponding to the PSSCH for the unicast SL transmission includes a negative-ACK, NACK, increasing the value of the second contention window to a next higher value.

5. The method of claim 1, wherein the value is adjusted or maintained based on the HARQ-ACK/NACK feedbacks.

6. A first user equipment, UE, in a wireless communication system, the first UE comprising:
at least one transceiver (1210, 1220);
at least one processor (1230) communicatively coupled to the at least one transceiver; and
at least one memory, communicatively coupled to the at least one processor, storing instructions executable by the at least one processor individually or in any combination to cause the first UE to:
transmit, to a second UE among UEs in a groupcast sidelink, SL, transmission, a physical sidelink shared channel, PSSCH, in a reference duration,
receive, from the second UE, a hybrid automatic repeat request acknowledgement/negative acknowledgement, HARQ-ACK/NACK, feedback corresponding to the PSSCH for the groupcast SL transmission,
identify whether a ratio of a number of ACK in HARQ-ACK/NACK feedbacks from the UEs is equal to or larger than a threshold, wherein the HARQ-ACK/NACK feedbacks include the HARQ-ACK/NACK feedback from the second UE,
in case that the ratio is equal to or larger than the threshold, set a value of a contention window to a minimum value, and
in case that the ratio is less than the threshold, increase the value to a next higher value.

7. The first UE of claim 6, wherein the reference duration includes a duration starting from a beginning of a channel occupancy for the PSSCH until an end of a first slot in which the PSSCH is transmitted.

8. The first UE of claim 6, wherein the instructions further cause the first UE to:
transmit a PSSCH for a unicast SL transmission based on a channel sensing, and
identify a value of a second contention window for an SL transmission based on whether a HARQ-ACK/NACK feedback corresponding to the PSSCH for the unicast SL transmission includes an ACK.

9. The first UE of claim 8, wherein the instructions further cause the first UE to:
in case that the HARQ-ACK/NACK feedback corresponding to the PSSCH for the unicast SL transmission includes the ACK, set the value of the second contention window to a minimum value, and
in case that the HARQ-ACK/NACK feedback corresponding to the PSSCH for the unicast SL transmission includes a negative-ACK, NACK, increase the value of the second contention window to a next higher value.

10. The first UE of claim 6, wherein the value is adjusted or maintained based on the HARQ-ACK/NACK feedbacks.

## Patentansprüche

1. Verfahren, das von einem ersten Benutzergerät, UE, in einem drahtlosen Kommunikationssystem ausgeführt wird, wobei das Verfahren Folgendes umfasst:
Übertragen, an ein zweites UE unter UEs in einer Groupcast-Sidelink(SL)-Übertragung, eines gemeinsam genutzten physikalischen Sidelink-Kanals, PSSCH, in einer Referenzdauer;
Empfangen, von dem zweiten UE, eines HARQ-ACK/NACK(hybride automatische Wiederholungsanforderungsbestätigung / negative Bestätigung)-Feedbacks, das dem PSSCH für die Groupcast-SL-Übertragung entspricht;
Identifizieren, ob ein Verhältnis einer Anzahl von ACK in HARQ-ACK/NACK-Feedbacks von den UEs gleich oder größer als ein Schwellenwert ist, wobei die HARQ-ACK/NACK-Feedbacks das HARQ-ACK/NACK-Feedback von dem zweiten UE enthalten;
falls das Verhältnis gleich oder größer als der Schwellenwert ist, Setzen eines Wertes eines Konfliktfensters auf einen Mindestwert; und
falls das Verhältnis kleiner als der Schwellenwert ist, Erhöhen des Wertes auf einen nächsthöheren Wert.

2. Verfahren nach Anspruch 1, wobei die Referenzdauer eine Dauer enthält, die von einem Beginn einer Kanalbelegung für den PSSCH bis zu einem Ende eines ersten Slots ausgeht, in dem der PSSCH übertragen wird.

3. Verfahren nach Anspruch 1, das ferner Folgendes umfasst:
Übertragen eines PSSCH für eine Unicast-SL-Übertragung basierend auf einer Kanalerkennung; und
Identifizieren eines Wertes eines zweiten Konfliktfensters für eine SL-Übertragung basierend darauf, ob ein HARQ-ACK/NACK-Feedback, das dem PSSCH für die Unicast-SL-Übertragung entspricht, eine ACK enthält.

4. Verfahren nach Anspruch 3, wobei das Identifizieren des Wertes des zweiten Konfliktfensters basierend darauf, ob das HARQ-ACK/NACK-Feedback die ACK enthält, ferner Folgendes umfasst:
falls das HARQ-ACK/NACK-Feedback, das dem PSSCH für die Unicast-SL-Übertragung entspricht, die ACK enthält, Setzen des Wertes des zweiten Konfliktfensters auf einen Mindestwert; und
falls das HARQ-ACK/NACK-Feedback, das dem PSSCH für die Unicast-SL-Übertragung entspricht, eine negative ACK, NACK, enthält, Erhöhen des Wertes des zweiten Konfliktfensters auf einen nächsthöheren Wert.

5. Verfahren nach Anspruch 1, wobei der Wert basierend auf den HARQ-ACK/NACK-Feedbacks angepasst oder aufrechterhalten wird.

6. Erstes Benutzergerät, UE, in einem drahtlosen Kommunikationssystem, wobei das erste UE Folgendes umfasst:
mindestens einen Transceiver (1210, 1220);
mindestens einen Prozessor (1230), der mit dem mindestens einen Transceiver kommunikativ gekoppelt ist; und
mindestens einen Speicher, der mit dem mindestens einen Prozessor kommunikativ gekoppelt ist und Anweisungen speichert, die von dem mindestens einen Prozessor einzeln oder in einer Kombination ausgeführt werden können, um das erste UE zu Folgendem zu veranlassen:
Übertragen, an ein zweites UE unter UEs in einer Groupcast-Sidelink(SL)-Übertragung, eines gemeinsam genutzten physikalischen Sidelink-Kanals, PSSCH, in einer Referenzdauer;
Empfangen, von dem zweiten UE, eines HARQ-ACK/NACK(hybride automatische Wiederholungsanforderungsbestätigung / negative Bestätigung)-Feedbacks, das dem PSSCH für die Groupcast-SL-Übertragung entspricht;
Identifizieren, ob ein Verhältnis einer Anzahl von ACK in HARQ-ACK/NACK-Feedbacks von den UEs gleich oder größer als ein Schwellenwert ist, wobei die HARQ-ACK/NACK-Feedbacks das HARQ-ACK/NACK-Feedback von dem zweiten UE enthalten;
falls das Verhältnis gleich oder größer als der Schwellenwert ist, Setzen eines Wertes eines Konfliktfensters auf einen Mindestwert, und
falls das Verhältnis kleiner als der Schwellenwert ist, Erhöhen des Wertes auf einen nächsthöheren Wert.

7. Erstes UE nach Anspruch 6, wobei die Referenzdauer eine Dauer enthält, die von einem Beginn einer Kanalbelegung für den PSSCH bis zu einem Ende eines ersten Slots ausgeht, in dem der PSSCH übertragen wird.

8. Erstes UE nach Anspruch 6, wobei die Anweisungen das erste UE ferner zu Folgendem veranlassen:
Übertragen eines PSSCH für eine Unicast-SL-Übertragung basierend auf einer Kanalerkennung, und
Identifizieren eines Wertes eines zweiten Konfliktfensters für eine SL-Übertragung basierend darauf, ob ein HARQ-ACK/NACK-Feedback, das dem PSSCH für die Unicast-SL-Übertragung entspricht, eine ACK enthält.

9. Erstes UE nach Anspruch 8, wobei die Anweisungen das erste UE ferner zu Folgendem veranlassen:
falls das HARQ-ACK/NACK-Feedback, das dem PSSCH für die Unicast-SL-Übertragung entspricht, die ACK enthält, Setzen des Wertes des zweiten Konfliktfensters auf einen Mindestwert, und
falls das HARQ-ACK/NACK-Feedback, das dem PSSCH für die Unicast-SL-Übertragung entspricht, eine negative ACK, NACK, enthält, Erhöhen des Wertes des zweiten Konfliktfensters auf einen nächsthöheren Wert.

10. Erstes UE nach Anspruch 6, wobei der Wert basierend auf den HARQ-ACK/NACK-Feedbacks angepasst oder aufrechterhalten wird.

## Revendications

1. Procédé mis en œuvre par un premier équipement utilisateur, UE, dans un système de communication sans fil, le procédé comprenant :
transmettre, à un deuxième UE parmi les UE dans une transmission de liaison latérale, SL, de diffusion de groupe, un canal partagé de liaison latérale physique, PSSCH, dans une durée de référence ;
recevoir, du deuxième UE, un retour d'accusé de réception de demande de répétition automatique hybride / accusé de réception négatif, HARQ-ACK/NACK, correspondant au PSSCH pour la transmission SL de diffusion de groupe ;
identifier si un rapport d'un nombre d'ACK dans des retours HARQ-ACK/NACK provenant des UE est égal ou supérieur à un seuil, où les retours HARQ-ACK/NACK incluent le retour HARQ-ACK/NACK provenant du deuxième UE ;
dans le cas où le rapport est égal ou supérieur au seuil, définir une valeur d'une fenêtre de contention à une valeur minimale ; et
dans le cas où le rapport est inférieur au seuil, augmenter la valeur à une valeur supérieure suivante.

2. Procédé selon la revendication 1, où la durée de référence inclut une durée commençant à partir du début d'occupation de canal pour le PSSCH jusqu'à la fin d'un premier créneau dans lequel le PSSCH est transmis.

3. Procédé selon la revendication 1, comprenant en outre :
transmettre un PSSCH pour une transmission SL en monodiffusion sur la base d'une détection de canal ; et
identifier une valeur d'une deuxième fenêtre de contention pour une transmission SL selon si un retour HARQ-ACK/NACK correspondant au PSSCH pour la transmission SL en monodiffusion inclut ou non un ACK.

4. Procédé selon la revendication 3, où l'identification de la valeur de la deuxième fenêtre de contention selon si le retour HARQ-ACK/NACK inclut ou non l'ACK comprend en outre :
dans le cas où le retour HARQ-ACK/NACK correspondant au PSSCH pour la transmission SL en monodiffusion inclut l'ACK, définir la valeur de la deuxième fenêtre de contention à une valeur minimale ; et
dans le cas où le retour HARQ-ACK/NACK correspondant au PSSCH pour la transmission SL en monodiffusion inclut un ACK négatif, NACK, augmenter la valeur de la deuxième fenêtre de contention à une valeur supérieure suivante.

5. Procédé selon la revendication 1, où la valeur est ajustée ou maintenue sur la base des retours HARQ-ACK/NACK.

6. Premier équipement utilisateur, UE, dans un système de communication sans fil, le premier UE comprenant :
au moins un émetteur-récepteur (1210, 1220) ;
au moins un processeur (1230) couplé de manière communicative à l'au moins un émetteur-récepteur ; et
au moins une mémoire, couplée de manière communicative à l'au moins un processeur, stockant des instructions exécutables par l'au moins un processeur individuellement ou dans n'importe quelle combinaison pour amener le premier UE à :
transmettre, à un deuxième UE parmi les UE dans une transmission de liaison latérale, SL, de diffusion de groupe, un canal partagé de liaison latérale physique, PSSCH, dans une durée de référence,
recevoir, du deuxième UE, un retour d'accusé de réception de demande de répétition automatique hybride / accusé de réception négatif, HARQ-ACK/NACK, correspondant au PSSCH pour la transmission SL de diffusion de groupe,
identifier si un rapport d'un nombre d'ACK dans des retours HARQ-ACK/NACK provenant des UE est égal ou supérieur à un seuil, où les retours HARQ-ACK/NACK incluent le retour HARQ-ACK/NACK provenant du deuxième UE,
dans le cas où le rapport est égal ou supérieur au seuil, définir une valeur d'une fenêtre de contention à une valeur minimale, et
dans le cas où le rapport est inférieur au seuil, augmenter la valeur à une valeur supérieure suivante.

7. Premier UE selon la revendication 6, où la durée de référence inclut une durée commençant à partir du début d'une occupation de canal pour le PSSCH jusqu'à la fin d'un premier créneau dans lequel le PSSCH est transmis.

8. Premier UE selon la revendication 6, où les instructions amènent en outre le premier UE à :
transmettre un PSSCH pour une transmission SL en monodiffusion sur la base d'une détection de canal, et
identifier une valeur d'une deuxième fenêtre de contention pour une transmission SL selon si un retour HARQ-ACK/NACK correspondant au PSSCH pour la transmission SL en monodiffusion inclut ou non un ACK.

9. Premier UE selon la revendication 8, où les instructions amènent en outre le premier UE à :
dans le cas où le retour HARQ-ACK/NACK correspondant au PSSCH pour la transmission SL en monodiffusion inclut l'ACK, définir la valeur de la deuxième fenêtre de contention à une valeur minimale, et
dans le cas où le retour HARQ-ACK/NACK correspondant au PSSCH pour la transmission SL en monodiffusion inclut un ACK négatif, NACK, augmenter la valeur de la deuxième fenêtre de contention à une valeur supérieure suivante.

10. Premier UE selon la revendication 6, où la valeur est ajustée ou maintenue sur la base des retours HARQ-ACK/NACK.
